(19) Europäisches Patentamt
European Patent Office
Office européen des brevets

(11) **EP 3 181 221 A1**

(12) **EUROPÄISCHE PATENTANMELDUNG**

(43) Veröffentlichungstag:
**21.06.2017 Patentblatt 2017/25**

(51) Int Cl.:
***B01J 19/00*** *(2006.01)* ***B01J 19/24*** *(2006.01)*

(21) Anmeldenummer: **15200463.6**

(22) Anmeldetag: **16.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Fluitec Invest AG**
**8442 Hettlingen (CH)**

(72) Erfinder:
• **GEORG, Alain**
**8442 Hettlingen (CH)**

• **LOTH, Wolfgang**
**67098 Bad Dürkheim (DE)**
• **EIHOLZER, Adrian**
**8405 Winterhur (CH)**
• **MERKEL, Norbert**
**78234 Engen (DE)**

(74) Vertreter: **Clerc, Natalia**
**Isler & Pedrazzini AG**
**Giesshübelstrasse 45**
**Postfach 1772**
**8027 Zürich (CH)**

(54) **VERFAHREN ZUR ÜBERWACHUNG EINER CHEMISCHEN REAKTION UND REAKTOR**

(57) In einem Verfahren zur Überwachung einer endothermen oder exothermen chemischen Reaktion in einem kontinuierlich betriebenen Reaktor mit einer Hauptströmungsrichtung und mit mindestens einem Reaktorabschnitt, wird mindestens ein Reaktorabschnitt (1, 2, 3) von einem Wärmeträgermedium durchströmt, wobei sich die Temperaturänderung des Wärmeträgermediums innerhalb des Reaktorabschnitts (1, 2, 3) sich in Bezug auf die Hauptströmungsrichtung annähernd linear verhält. In einem Segment ($L_S$) innerhalb des Reaktorabschnitts (1, 2, 3) wird eine Temperaturdifferenz eines sich dort befindlichen Produktgemischs gemessen. Dank des linearen Temperaturverlaufs des Wärmeträgermediums in diesem Segment ($L_S$) lässt sich aus der abgeführten Wärmemenge und der nicht abgeführten Wärmemenge in diesem Segment ($L_S$) die dort chemisch umgesetzte Wärme berechnen und zur Überwachung des Reaktors einsetzen.

Fig. 1

**Beschreibung**

TECHNISCHES GEBIET

Die vorliegende Erfindung betrifft ein Verfahren zur Überwachung einer endothermen oder exothermen chemischen Reaktion in einem kontinuierlich betriebenen Reaktor, ein System zur Durchführung eines derartigen Verfahrens, einen chemischen Reaktor zur Durchführung des Verfahrens sowie ein System mit einem derartigen Reaktor.

STAND DER TECHNIK

Ein chemischer Reaktor ist derjenige Teil einer Anlage, in welchem chemische Prozesse ablaufen und chemische Umsetzungen durchgeführt werden. Solche Reaktoren werden üblicherweise in Batch-, Semibatch-Prozessen oder kontinuierlich als Loop oder kontinuierlichen Rohrreaktoren eingesetzt.

Viele chemische Stoffumwandlungen setzen Wärme frei, die im Labormaßstab aufgrund der geringen Ansatzmengen klein ist und kontrolliert abgeführt werden kann. Im industriellen Maßstab, bei Umsätzen von mehreren 1000 Tonnen, werden Energiemengen frei, die potentiell eine hohe Zerstörungskraft besitzen und damit eine Gefahr darstellen. Dies ist beispielsweise in der Dissertation "Anwendung der TRAS 410 auf die sicherheitstechnische Beurteilung einer Perestersynthese", Annette Knorr, 2005 beschrieben.

Kann die pro Zeiteinheit freigesetzte Wärmemenge nicht ausreichend abgeführt werden, erwärmt sich die Reaktionsmasse selbst. In Folge dessen erhöht sich die Reaktionsgeschwindigkeit und die Reaktion beschleunigt sich. Ist diese Situation nicht mehr kontrollierbar, kommt es zur sogenannten thermischen Explosion (dem sogenannten Runaway), die aufgrund einsetzender Verdampfung und Gasentwicklung meist mit hohem Druckaufbau verbunden ist.

Für die Beschreibung einer Temperaturverteilung in einem realen Reaktor wurden von Semenov und Frank-Kamenetzkii Modellvorstellungen entwickelt, die zwei Grenzfälle betrachten.

Das Modell von Semenov geht davon aus, dass die Wärme homogen im Reaktionsgemisch verteilt ist und damit kein Temperaturgefälle im Gemisch vorliegt. Erst an der Wand des Reaktors wird ein Temperaturprofil ausgebildet, der Wärmeaustausch mit der Umgebung wird durch den Wärmedurchgang bestimmt. Es beschreibt die Situation für gut durchmischte, niedrig viskose Systeme wie z. B. einer homogenen Flüssigphasenreaktion im Rührreaktor.

Das zweite Modell, entwickelt von Frank-Kamenetzkii, geht von einem nicht durchmischten System aus, z. B. einer Feststoffschüttung. Innerhalb des Systems liegt ein Temperaturprofil vor, die Wärmeleitfähigkeit der Substanz ist die für den Wärmeaustausch mit der Umgebung entscheidende Größe. Beide Modelle sind Grenzbetrachtungen und bilden eine sehr gute Grundlage für das sicherheitstechnische Verständnis und weisen auf die Gefahren in den Prozessen hin. Ist das Gefahrenpotential erkannt, so muss ein geeigneter entsprechend sicherer Prozess erarbeitet werden.

Das Umstellen eines Semi-Batch oder Batch-Prozesses auf eine kontinuierliche Betriebsweise bietet verschiedene entscheidende Vorteile, wie erhöhte Sicherheit, konstante Produktqualität und maximale Wirtschaftlichkeit. Die kontinuierliche Produktionsweise erfordert jedoch bereits in der Planungsphase die Berücksichtigung verschiedenster Einflussgrössen wie Kinetik, Thermodynamik, Selektivität und Energieflüsse. Wenn diesen Schlüsselgrössen ausreichend Rechnung getragen wird, lässt sich eine kontinuierliche Reaktion sicher, konstant und mit grösstmöglichen Raum/Zeit-Ausbeuten führen.

Kontinuierliche Reaktoren sind einerseits Mikroreaktoren, Leerrohre, Rohrschlangen oder Rührwerke mit einer Zuführung und einem Abfluss. Andererseits sind auch statische Mischer oder Mischer-Wärmetauscher, wie sie in EP 1'067'352, WO 2008/141472, EP 2'796'195 und EP 2'286'904 vorkommen, kontinuierliche Reaktoren. CH 705 823 beschreibt einen kontinuierlichen Loop-Reaktor. In einem Loop-Reaktor wird der Gemischstrom zumindest teilweise zurückgeführt, was zu einer Verdünnung des Zulaufes und damit zu einer Dämpfung einer heftigen Reaktion führt. Der Nachteil eines Loop-Reaktors oder Kreislaufreaktor ist, dass einerseits eine zusätzliche Pumpe benötigt wird, was zu Verschleiss und erhöhtem Wartungsaufwand führt, und dass andererseits die rückgeführte Mengen Qualitätseinbussen bei der resultierenden Produktqualität hervorrufen kann.

Die Umwandlung diskontinuierlicher chemischer Prozesse in eine kontinuierliche Prozessführung unter Verwendung mikrostrukturierter Reaktoren für die Reaktionstechnik wird beispielsweise ausführlich in der Chem. Ing. Tech. 2009, 81, No. 1-2 von Peter Hugo und Fernando Lopez beschrieben. Darin wird ein Sicherheitskonzept für Mikro- und Rohrreaktoren vorgestellt, bei dem die thermische Masse des Reaktors gross genug ist, um die Reaktionswärme aufzunehmen. Dies ist allerdings nur für kleine Reaktorkonzepte wie Mikroreaktoren geeignet. Zudem wird das Prinzip des kaskadierten Reaktors mit einer Vielzahl von seitlichen in Serie geschalteten Dosierungen der Eduktzuströme beschrieben, um einen sogenannten Semi-Batch-Reaktor in ein kontinuierliches Verfahren zu überführen. Dies führt jedoch zu einem erheblichen dosiertechnischem Aufwand und hohen Investitions- und Wartungskosten.

Bei sämtlichen kontinuierlichen Verfahren mit endo- oder exothermen Reaktionsprozessen ist wichtig, dass man einerseits weiss, wo die Reaktion stattfindet, und andererseits, ob auch der grösste Teil der produzierten Wärmemenge kontrolliert abgeführt wird. Schliesslich ist es von grösster Bedeutung, dass die endo- oder exothermen Reaktionsprozesse sicher betrieben und kontrolliert werden können.

Um die Prozesse abzusichern, sind zahlreiche Produkte und Möglichkeiten für den sicheren Betrieb eines kontinuierlichen Reaktionsprozesses auf dem Markt erhältlich, wie beispielsweise:

- Sicherheitsventile,
- Berstscheiben,
- einstufige und mehrstufige Temperatursensoren
  (PT-100, Thermoelemente bsp. Typ K oder Typ J, Glasfasersensoren, Fibre Brag),
- Druckmesssensoren,
- Sonden zur Messung von Stoffeigenschaften
  (beispielsweise Brechungsindex-, pH-Sonden, Infrarot-, NIR- und ATR-Sonden),
- Druckhalteventile zur Kontrolle des Aggregatzustandes der Reaktionsstoffe im Reaktionsraum oder -abschnitt.

Dank dieser zahlreichen Komponenten ist es möglich, Maßnahmen für die Sicherheit des Prozesses zu ergreifen. Dabei sollte man zwischen vorbeugenden Maßnahmen zur Verhinderung eines unkontrollierten Reaktionsablaufs und konstruktiven Maßnahmen zur Verhinderung unzulässiger Auswirkungen eines unkontrollierten Reaktionsablaufs unterscheiden.

Hier kommen, je nach den Bedingungen des Einzelfalls alternativ oder in Kombination, folgende Maßnahmen in Frage:

- vorbeugende Maßnahmen, wie z. B.:

  - organisatorische Maßnahmen,
  - Konzepte mit Mitteln der Prozessleittechnik,
  - Abstoppersysteme,
  - Notkühlung.

- konstruktive Maßnahmen, wie z. B.:

  - druck- und temperaturfeste Bauweise,
  - Druckentlastung.

Um entsprechende vorbeugende Massnahmen jedoch einleiten zu können, muss in kontinuierlichen Prozessen ein unerwünschter oder zur Störung führender Prozesszustand sicher und ausreichend früh erkannt werden.

DARSTELLUNG DER ERFINDUNG

Es ist deshalb eine Aufgabe der Erfindung, eine verbesserte Überwachung in einem kontinuierlich betriebenen Reaktor zu ermöglichen..

Diese Aufgabe löst das Verfahren zur Überwachung einer endothermen oder exothermen chemischen Reaktion in einem kontinuierlich betriebenen Reaktor mit einer Hauptströmungsrichtung und mit mindestens einem Reaktorabschnitt,
wobei dem Reaktor Stoffe zugeführt werden und im Reaktor ein Produktgemisch aus diesen Stoffen und ihren Umsetzungsprodukten entsteht,
wobei mindestens ein Reaktorabschnitt des mindestens einen Reaktorabschnitts von einem Wärmeträgermedium durchströmt wird, wobei sich die Temperaturänderung des Wärmeträgermediums innerhalb des Reaktorabschnitts in Bezug auf die Hauptströmungsrichtung annähernd linear verhält,
wobei eine Temperaturdifferenz einer Eingangstemperatur des Wärmeträgermediums beim Eintritt in diesen einen Reaktorabschnitt und einer Ausgangstemperatur des Wärmeträgermediums beim Austritt aus diesem einen Reaktorabschnitt ermittelt wird, wobei der Massenstrom des Wärmeträgermediums durch den einen Reaktorabschnitt ermittelt wird,
wobei eine Temperaturdifferenz des Produktgemischs zwischen einer ersten Stelle und einer zweiten Stelle innerhalb dieses einen Reaktorabschnitt ermittelt wird, wobei der Bereich zwischen der ersten Stelle und der zweiten Stelle ein Reaktorsegment des einen Reaktorabschnitts bilden,
wobei der Massenstrom des Produktgemischs durch den einen Reaktorabschnitt ermittelt wird,
wobei basierend auf dem ermittelten Massenstrom des Wärmeträgermediums und der ermittelten Temperaturdifferenz des Wärmeträgermediums bezogen auf gesamten einen Reaktorabschnitt und unter Berücksichtigung der linear verlaufenden Temperaturänderung die im Reaktorsegment des einen Reaktorabschnitts abgeführte Wärmemenge berechnet wird,

wobei basierend auf dem ermittelten Massenstrom des Produktgemischs und der ermittelten Temperaturdifferenz des Produktgemischs die im Reaktorsegment des einen Reaktorabschnitts nicht abgeführte Wärmemenge berechnet wird und

wobei anhand der Summe der abgeführten Wärmemenge und der nicht abgeführten Wärmemenge die chemisch umgesetzte Wärmemenge in diesem Reaktorsegment berechnet wird.

Die zugeführten Stoffe sind Edukte wie Hauptkomponenten, Additive, Aktivatoren, Lösungsmittel, Emulsionszusätze und Katalysatoren. Sie können in flüssiger, gasförmiger oder teils in fester Form vorliegen. Zudem können die Reaktionen in einer verdünnten Lösung oder auch in einer Dispersion durchgeführt werden.

Das erfindungsgemässe Verfahren nutzt das lineare Temperaturverhalten des Wärmeträgermediums im Reaktorabschnitt, um die vom Wärmeträgermedium in einem Teilbereich des Reaktorabschnitts abgeführte Wärmemenge zu berechnen und dadurch die chemisch umgesetzte Wärmemenge zu berechnen.

Basierend auf der berechneten chemisch umgesetzten Wärmemenge lässt sich zudem der Teilumsatz im Reaktorsegment berechnen.

Ein weiterer Vorteil ist, dass Prozessstörungen frühzeitig und sicher erkannt werden können.

Dadurch lässt sich der Umsatz im Reaktor mit ausreichender Genauigkeit messen und es lassen sich exotherme und endotherme chemische Reaktionen sicher durchführen.

Vorzugsweise werden die chemisch umgesetzte Wärmemenge und/oder ein daraus resultierender Umsatz pro Reaktorsegment für den gesamten einen Reaktorabschnitt graphisch und/oder Prozessstörungen optisch und/oder akustisch dargestellt.

Vorzugsweise wird die Temperatur des Wärmeträgermediums am Eingang und am Ausgang des einen Reaktorabschnitts ermittelt, indem sie gemessen wird oder indem die Temperaturdifferenz des Wärmeträgermediums zwischen Eingang und Ausgang des einen Reaktorabschnitts gemessen wird.

Vorzugsweise wird der Massenstrom des Wärmeträgermediums ermittelt, indem er beim Eintritt in den einen Reaktorabschnitt gemessen wird. Er lässt sich alternativ oder zusätzlich auch über die Kennlinie einer Förderpumpe des Wärmeträgermediums ermitteln.

Die Temperatur des Produktgemischs wird vorzugsweise ermittelt, indem sie an der ersten Stelle und an der zweiten Stelle gemessen wird oder indem die Temperaturdifferenz des Produktgemischs zwischen der ersten Stelle und der zweiten Stelle gemessen wird.

Vorzugsweise wird der Massenstrom des Produktstroms ermittelt, indem die Summe der Massenströme der zugeführten Stoffe am Eingang des Reaktors und/oder der Massenstrom des Produktgemischs bzw. des Produkts am Ausgang des Reaktors gemessen wird. Werden alle diese Ströme gemessen, lassen sich über einen Vergleich der eingangs- und ausgangsseitig gemessenen Werte Fehler und Störungen erkennen.

Vorzugsweise erfolgen Messungen der Massenströme und/oder der Temperaturen durch mindestens zwei Sensoren redundant, wobei die Messwerte redundanter Sensoren miteinander verglichen werden. Die Sensoren befinden sich dabei annähernd an derselben Stelle im Reaktor und sind vorzugsweise jeweils derselbe Sensortyp.

Vorzugsweise wird die Temperaturdifferenz des Produktstroms an mehr als zwei Stellen im Reaktorabschnitt ermittelt wird, wobei jeweils zwei dieser Stellen ein Reaktorsegment bilden, und wobei im Reaktorabschnitt für mehrere Reaktorsegmente die zugehörige chemisch umgesetzte Wärmemenge berechnet wird.

Vorzugsweise wird eine Fehlertoleranzrechnung gemäss dem Gaussschen Fehlerfortpflanzungsgesetz durchgeführt. In der Berechnung können folgende Parameter berücksichtigt werden:

- die gemessenen Massenströme
- die gemessenen Temperaturen
- die gemessenen Stoffdaten, wie Wärmekapazität und die Wärmeleitfähigkeit.

Es wurde gefunden, dass sich diese Fehlertoleranzrechnung bewährt, weil statistische Fehler mit gleicher Wahrscheinlichkeit einen Wert verkleinern oder vergrössern, d.h. verschiedene in das Ergebnis eingehende statistische Fehler einander teilweise kompensieren. Verwendet man eine Formel, die diesen Kompensationseffekt berücksichtigt, führt dies zu sehr guten Ergebnissen.

Vorzugsweise wird das Verfahren an mindestens zwei, drei oder mehr in Hauptströmungsrichtung hintereinander und in Serie angeordnete Reaktorabschnitte eines Reaktors durchgeführt wird. Es hat sich gezeigt, dass bei Durchführung des Verfahrens in den in Hauptströmungsrichtung drei ersten oder drei der vorderen Reaktorabschnitte optimale Resultate erzielt werden und die Wärmebilanz in nachfolgenden Reaktorabschnitte üblicherweise vernachlässigbar ist.

Vorzugsweise werden erste Berechnungen der chemisch umgesetzten Wärmemenge über eine Gruppe von Segmenten für jedes einzelne Segment einzeln durchgeführt, wobei zusätzlich eine zweite Berechnung der chemisch umgesetzten Wärmemenge über diese Gruppe von Segmente gemeinsam erfolgt und wobei die Summe der ersten Berechnungen mit der zweiten Berechnung verglichen wird. Dies ermöglicht ein Auffinden von allfälligen Fehlern in den Messungen bzw. Problemen in der chemischen Umsetzung.

Vorteilhaft ist, dass sich nach Massgabe der berechneten chemisch umgesetzten Wärmemenge der Reaktor steuern lässt. Die Steuerung erfolgt beispielsweise durch eine Änderung der Vortemperierung oder des zugeführten Massenstroms des Wärmeträgermediums und/oder der zugeführten Stoffe. Alternativ oder zusätzlich kann ein Teil des Produktgemischs frühzeitig dem Reaktor entnommen oder zum Zulauf des Reaktors oder eines Reaktorabschnitts rückgeführt werden.

Der erfindungsgemässe chemische Reaktor zur Durchführung des erfindungsgemässen Verfahrens weist mindestens einen Reaktorabschnitt auf, welcher einen ersten Zulauf zur Zuführung von Stoffen in den Reaktor aufweist und einen ersten Auslauf zur Abführung des aus den Stoffen durch endotherme oder exotherme Reaktion entstehenden Produktes. Im ersten Auslauf des Reaktors ist ein Massenstromsensor angeordnet zur Ermittlung des Massenstroms des Produktgemischs, wobei der Reaktor ferner einen zweiten Zulauf und einen zweiten Auslauf für ein Wärmeträgermedium aufweist, wobei im zweiten Zulauf und im zweiten Auslauf mindestens ein Temperatursensor zur Ermittlung der Temperatur oder der Temperaturdifferenz des Wärmeträgermediums angeordnet ist und wobei im zweiten Zulauf ein Sensor zur Ermittlung des Massenstroms des Wärmeträgermediums angeordnet ist, und wobei innerhalb des Reaktorabschnitts an einer ersten Stelle und an einer zweiten Stelle, welche in Hauptströmungsrichtung hintereinander angeordnet sind und ein Reaktorsegment definieren, je ein Temperatursensor zur Ermittlung der Temperatur oder der Temperaturdifferenz des Produktgemischs an dieser ersten und zweiten Stelle angeordnet ist. Vorzugsweise messen diese Sensoren die notwendigen Werte.

Vorzugsweise weist der Reaktorabschnitt einen statischen Mischer oder einen Mischer-Wärmetauscher auf. Eine besondere Eigenschaft von statischen Mischern und Mischer-Wärmetauschern ist, dass sie bei stationären Bedingungen einen konstanten Wärmedurchgangskoeffizienten k aufweisen. Dadurch ist der lineare Temperaturverlauf des Wärmeträgermediums innerhalb des Reaktorabschnitts gewährleistet.

Das erfindungsgemässe Verfahren und der erfindungsgemässe Reaktor ermöglichen eine redundante Überwachung des kontinuierlichen Verfahrens. Vorzugsweise ist die Überwachung dreifach abgesichert.

Das erfindungsgemässe System zur Durchführung des erfindungsgemässen Verfahrens ist ausgebildet, um die Temperaturdifferenz des Wärmeträgermediums, die Temperaturdifferenz des Produktgemischs, den Massenstrom des Wärmeträgermediums und den Massenstrom des Produktgemischs zu bestimmen, wobei das System zudem ausgebildet ist, um die chemisch umgesetzte Wärmemenge zu berechnen. Dies lässt sich durch Wahl geeigneter Sensoren, elektronischen Schaltungen und elektronischen Berechnungsmitteln erreichen.

Erfindungsgemäss lassen sich Steuer- und Regelmechanismen zur Verfügung stellen, welche eine kontrollierte Reaktionsführung ermöglichen. Dies ist dank der erfindungsgemässen Erfassung von zeitlichen und örtlichen Temperaturentwicklungen und der Berechnung des Umsatzverlaufes im Reaktor möglich.

In einer bevorzugten Variante weist das den oben beschriebenen erfindungsgemässen Reaktor auf. Es weist zudem eine elektronische Auswerteeinheit auf zur Berechnung der chemisch umgesetzten Wärmemenge basierend auf den gemessenen Werten. Vorzugsweise weist das System zudem eine elektronische Steuereinheit auf zur Steuerung des Reaktors basierend auf der berechneten chemisch umgesetzten Wärmemenge.

KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnungen, die lediglich zur Erläuterung dienen und nicht einschränkend auszulegen sind. Die Zeichnungen zeigen

Figur 1      eine schematische Darstellung eines erfindungsgemässen Reaktors mit drei Reaktorabschnitten in einer ersten Ausführungsform;

Figur 2      eine graphische Darstellung der Temperaturtoleranz eines PT100 Temperatursensors in Abhängigkeit der Temperatur mit und ohne Auswerteelektronik;

Figur 3      eine graphische Darstellung einer Fehlerrechnung, wobei der Bilanzierungsfehler in Abhängigkeit von dem HTM Massenstrom bei verschiedenen Temperaturen dargestellt ist;

Figur 4      eine graphische Darstellung eines Temperaturverlauf in Abhängigkeit der Reaktorlänge eines erfindungsgemässen Reaktors, welcher genau drei Reaktorabschnitte aufweist;

Figur 5      eine graphische Darstellung eines Wärmestromverlaufs der Reaktorabschnitte in Abhängigkeit der Reaktorlänge des Reaktors gemäss Figur 4, wobei zudem eine Umsatzkurve gebildet aus der Summe der über die Wärmeströme ermittelten Teilumsätze dargestellt ist;

Figur 6    eine graphische Darstellung eines Temperaturverlauf mit einer Trendlinie für die HTM-Temperatur in Abhängigkeit der Reaktorlänge des Reaktors gemäss Figur 4;

Figur 7    eine schematische Darstellung eines erfindungsgemässen Reaktor mit drei im Gleichstrom geschalteten Reaktorabschnitten in einer zweiten Ausführungsform und

Figur 8    eine schematische Darstellung eines Reaktorsegments mit Temperatursensoren eines Mehrfachtemperatursensors.

## BESCHREIBUNG BEVORZUGTER AUSFÜHRUNGSFORMEN

Im Folgenden werden zwei Ausführungsformen des erfindungsgemässen Reaktors beschrieben und anschliessend werden der theoretische Hintergrund und das erfindungsgemässe Verfahren erläutert.

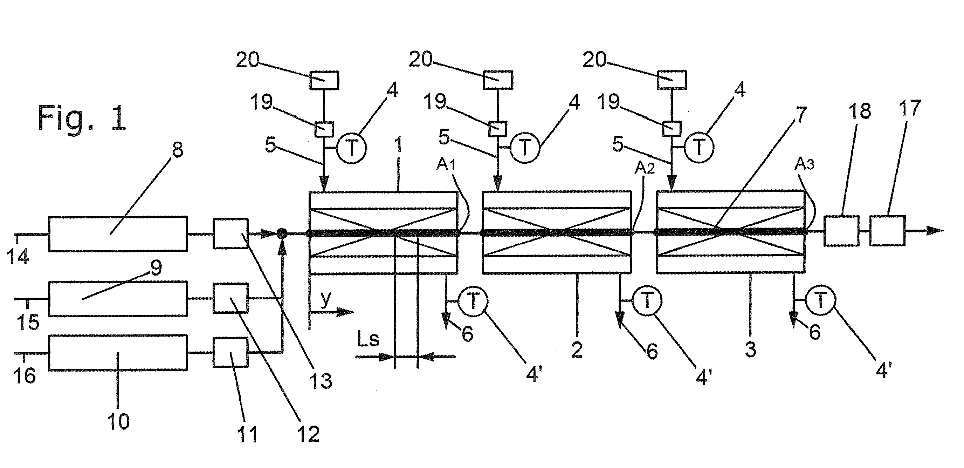

In Figur 1 ist ein erstes Ausführungsbeispiel eines erfindungsgemässen Reaktors dargestellt. Er weist mindestens zwei, vorzugsweise genau drei oder mehr Reaktorabschnitte 1, 2, 3 auf, welche in Hauptströmungsrichtung y des Reaktors in Serie hintereinander angeordnet sind. Ein Austritt des ersten Reaktorabschnitts 1 ist somit mit einem Eintritt des zweiten Reaktorabschnitts 2 verbunden und ein Austritt des zweiten Reaktorabschnitts 2 ist mit einem Eintritt des dritten Reaktorabschnitts 3 verbunden.

Mindestens ein Reaktorabschnitt 1, 2, 3, vorzugsweise der erste oder einer der ersten Reaktorabschnitte wird zwecks Temperierung (d.h. Erwärmung oder Kühlung) von einem Wärmeträgermedium durchströmt. Im Folgenden wird das Wärmeträgermedium auch als HTM (Heat Transfer Medium) bezeichnet. Der Reaktorabschnitt ist dabei so gewählt, insbesondere in seiner Länge, dass der Temperaturverlauf des Wärmeträgermediums in diesem Reaktorabschnitt annähernd linear ist. Vorzugsweise weisen alle Reaktorabschnitte 1, 2, 3 des Reaktors ein derart lineares Verhalten auf.

Dieser mindestens eine Reaktorabschnitt weist vorzugsweise einen temperierten statischen Mischer oder Mischer-Wärmetauscher auf. Vorzugsweise besteht der entsprechende Reaktorabschnitt 1, 2, 3 aus einem derartigen Mischer oder Mischer-Wärmetauscher. Vorzugsweise werden Mischer-Wärmetauscher mit innen liegenden Kühlrohren, insbesondere Fluitec CSE-XR Mischer-Wärmetauscher, verwendet. Dabei wird der statische Mischer oder der Mischer-Wärmetauscher vom oben genannten Wärmeträgermedium durchströmt.

Eine besondere Eigenschaft von statischen Mischern und Mischer-Wärmetauschern ist, dass sie bei stationären Bedingungen einen konstanten Wärmedurchgangskoeffizienten k aufweisen und der Temperaturverlauf des Wärmeträgermediums somit annähernd linear ist.

Der Zulauf 5 des Wärmeträgermediums bzw. der Wärmeträgermedien erfolgt im Reaktor gemäss Figur 1 für jeden Reaktorabschnitt 1, 2, 3 separat über eine separate Wärmeträgerpumpe 20, hier auch HTM-Pumpe genannt. Der Massenstrom des Wärmeträgermediums wird vorzugsweise mittels eines Wärmeträger-Durchflusssensors 19 gemessen, auch HTM-Durchflusssensor genannt. Ferner ist im Wärmeträger-Zulauf, auch HTM-Zulauf 5 genannt, mindestens ein erster Temperatursensor 4 vorhanden, um die Temperatur des dort zugeführten Wärmeträgermediums zu messen.

Jeder HTM-durchströmte Reaktorabschnitt weist einen eigenen HTM-Austritt 6 auf. An diesem HTM-Austritt 6 ist ein zweiter Temperatursensor 4' angeordnet, welcher die Austrittstemperatur des Wärmeträgermediums beim Austritt aus dem entsprechenden Reaktorabschnitt misst.

Die ersten und zweiten Temperatursensoren 4, 4' der HTM-Ströme sind vorzugsweise PT100 Sensoren.

Anstelle von einzelnen ersten und/oder zweiten Temperatursensoren 4, 4' lassen sich auch mehrere erste und/oder zweite Temperatursensoren 4, 4' einsetzen. An gleichen Stellen platzierte Sensoren, d.h. zwei einlaufseitig platzierte Sensoren 4 oder zwei auslaufseitig platzierte Sensoren werden vorzugsweise redundant eingesetzt, indem ihre Messwerte beispielsweise miteinander verglichen werden.

HTM-seitig weisen die Reaktorabschnitte 1, 2, 3 bei Verwendung von statischen Mischern beispielsweise Ringspaltkonstruktionen und/oder bei Verwendung von Mischer-Wärmetauschern innenliegende Kühlrohre auf, welche für den Wärmeübergang auf der HTM-Seite verantwortlich sind. Um auch hier konstante $\alpha$-Wärmeübergangswerte zu erhalten, kann die Ringspaltkonstruktion einen sehr engen Ringspalt aufweisen. Der Ringspalt beträgt vorzugsweise 0.5 bis 10 mm. Werden Schaschlik-Umlenkbleche oder Drahtspiralen verwendet, sorgen diese dafür, dass die $\alpha$-Wärmeübergangswerte einen konstanten Wert annehmen.

In Mischer-Wärmtauscher-Konstruktionen mit innenliegenden Kühlrohren sorgen üblicherweise einfache Wendelelemente oder herkömmliche statische Mischer in den Kühlrohren für konstante $\alpha$-Wärmeübergangswerte.

In einer anderen Ausführungsform der Mischer-Wärmetauscher-Konstruktion ist in einem oder in allen Reaktorabschnitten 1, 2, 3 in jedem der HTM-führenden Rohre ein axial verlaufender, zentrischer Draht vorhanden, welcher die Ausbildung des parabolischen Strömungsprofils stört und dadurch für einen konstanten Wärmeübergang sorgt. In einer Ausführungsform eines Mischer-Wärmetauschers, mit beispielsweise 80 Rohren pro Reaktorabschnitt, weisen beispielsweise alle Rohre bis auf eines, hier 79 Rohre, einen innenliegenden Draht auf. Das weitere Rohr weist mindestens einen axialen Merfachtemperatursensor auf, der vorzugsweise den gleichen Durchmesser wie die 79 Drähte besitzt.

Dort, wo der HTM-Temperaturverlauf nicht linear verläuft, ist der jeweilige Reaktorabschnitt 1, 2, 3 durch zwei oder mehr, üblicherweise kürzere, Reaktorabschnitte zu ersetzen. Jeder der neu gewählten Reaktorabschnitte weist einen HTM-Zulauf und HTM-Auslauf zur Ermittlung einer zugehörigen HTM-Einlauf- und HTM-AuslaufTemperatur auf.

In dem in Figur 1 dargestellten Ausführungsbeispiel sind ferner drei Stoff-Zugänge oder -Zuläufe 14, 15, 16 für die zugeführten Stoffe, hier Eduktströme genannt, vorhanden, welcher dem Eingang des ersten Reaktorabschnittes 1 zugeführt werden. Eduktströme umfassen alle möglichen zuführbaren Stoffe wie Hauptkomponenten, Katalysatoren, Aktivatoren, Additive, Lösungsmittel, Emulsionszusatz und ähnliches. Vorzugsweise werden diese Stoffe bereits vor dem Eingang in den ersten Reaktorabschnitt 1 zusammengeführt und so gemeinsam in den Reaktorabschnitt eingeführt. Es können auch mehr oder weniger als drei Stoff-Zuläufe 14, 15, 16 für Eduktströme vorhanden sein. Die dem Reaktor zugeführten Stoffen bzw. das daraus den zugeführten Stoffen und ihren Umsetzungsprodukten resultierende Produktgemisch innerhalb des Reaktors durchströmen die einzelnen Reaktorabschnitte räumlich getrennt vom Wärmeträgermedium. Es ist auch möglich, dass die Zusatzstoffe vor dem Eintritt in den Reaktor alle oder teilweise miteinander gemischt werden.

Vorzugsweise ist mindestens einer der Stoff-Zuläufe, vorzugsweise sind alle Stoff-Zuläufe 14, 15, 16 mit einem Wärmetauscher 8, 9, 10 und einem Durchflussmesser 11, 12, 13 zur Durchflussmessung und -überwachung versehen. Die Wärmetauscher 8, 9, 10 befinden sich vorzugsweise in Hauptströmungsrichtung y vor den jeweiligen Durchflussmessern 11, 12,13.

Die Wärmetauscher 8, 9, 10 dienen zur Vortemperierung des jeweilig zugeführten Eduktstroms.

Vorzugsweise sind die Reaktorabschnitte 1, 2, 3 und vorzugsweise auch ihre HTM-Zuläufe wie auch die Stoff-Zuläufe 14, 15, 16 gut isoliert. Eine gute Isolation hilft die Wärmeverluste auf ein Minimum zu reduzieren und ist für eine fehlerarme und aussagekräftige Wärmebilanz vorteilhaft. Das Isolationsmaterial kann beispielsweise aus Steinwolle, Stopfwolle, Aerogel oder PU-Schaum bestehen.

Vorzugsweise herrschen in jedem Reaktorabschnitt 1, 2, 3 andere Prozessbedingungen vor als in den unmittelbar benachbarten Reaktorabschnitten 1, 2, 3. Die Reaktorabschnitte bestehen aus einem Apparat wie zum Beispiel der erwähnte temperierbare statische Mischer oder Mischer-Wärmetauscher.

Vorzugsweise wird mindestens einer der zugeführten Eduktströme vor Eintritt in den ersten Reaktorabschnitt 1 auf eine definierte Anfangsreaktionstemperatur gebracht. Die definierte Anfangsreaktionstemperatur definiert sich als die Temperatur, bei der die Reaktion am Eintritt startet. Dies kann beispielsweise identisch mit der Eintrittstemperatur des Wärmeträgermediums sein.

Am Austritt des Reaktors, hier am Ausgang des dritten Reaktorabschnittes 3, ist vorzugsweise ein Durchflusssensor 18 vorhanden. Dieser Durchflusssensor 18 misst den Massenstrom des Produktgemischs, d.h. die Summe der Masse der Eduktströme und ihrer Umsetzungsprodukte. Diese Messung dient zur Überwachung der Eduktströme.

Sind, wie hier dargestellt, bereits zulaufseitig Massenstromsensoren 11, 12, 13 vorhanden, welche die Massenströme der einzelnen zugeführten Edukte messen, so lässt sich die Durchflussüberwachung des Produktgemischs redundant durchführen. Die Sicherheits-Überwachung erfolgt, indem in einer Vergleichsschaltung der Summe aller Durchflussmesser 11, 12, 13 der zugeführten Stoffe mit der Summe des Durchflussmessers 18 des Produktstroms eine Störung entdeckt und entsprechend alarmiert werden kann. Die Durchflussmessung des Durchflussmessers 18 wird vorzugsweise als Massendurchflussmessung ausgeführt, um Fehler aus der reaktionsbedingten Volumenkontraktion zu vermeiden.

Am Austritt des Reaktors, hier am Austritt des dritten Reaktorabschnitts 3, ist vorzugsweise mindestens eine Qualitätsüberwachungssonde 17. Diese Sonde 17 kann beispielsweise eine pH-Wert Messung, eine Messung des Spektrums mit Infrarot oder eine NIR (near infrared) Sonde 17 sein. Diese Sonde 17 überwacht kontinuierlich die Qualität des Reaktionsproduktes am Austritt des Reaktors, wobei die Qualität sich auf die Umsetzung eines oder aller Edukte oder eine spezifizierte Eigenschaft des Produktes, wie Reinheit oder Selektivität bezüglich einer Zielsubstanz beziehen kann.

Der gesamte Reaktor kann im Gleich- oder im Gegenstrom betrieben werden. Im Gleichstrom erstrecken sich die Hauptströmungsrichtungen des Wärmeträgermediums und des Produktgemischs parallel zur Richtung der Hauptströmungsrichtung y des Reaktors. Im Gegenstrom ist die Hauptströmungsrichtung des Produktgemischs nach wie vor parallel zur Richtung y, die Hauptströmungsrichtung des Wärmeträgermediums zeigt jedoch in die entgegengesetzte Richtung. Es ist aber auch möglich, dass jeder Reaktorabschnitt 1, 2, 3 einzeln mit HTM im Gleich- oder im Gegenstrom temperiert wird. Dies hat den Vorteil, dass die Temperiermenge, z.B. die Kühlmenge, und die Temperiertemperatur, z.B. Kühltemperatur vor jedem Reaktorabschnitt 1, 2, 3 unabhängig gewählt werden kann. Dies gilt insbesondere für den Reaktor gemäss Figur 1. In diesem Fall wird der HTM Massenstrom vorzugsweise in jedem Reaktorabschnitt gemessen, wie dies anhand der Durchflusssensoren 19 in Figur 1 erkennbar ist.

In einer anderen Ausführungsform sind jedoch weniger oder keine derartigen HTM-Durchflusssensoren 19 vorhanden und der Massenstrom in die jeweiligen Reaktorabschnitte 1, 2, 3 wird über die Kennlinie der jeweiligen HTM-Pumpe 20 abgeschätzt. Es können auch alle HTM Durchflusssensoren 19 vorhanden sein und die Durchsatzermittlung auf der Basis der Pumpendrehzahl unter Zuhilfenahme der Pumpenkennlinie der jeweiligen HTM-Pumpe 20 wird als redundantes Mittel eingesetzt.

Um Fehler basierend auf dieser Abschätzung zu vermeiden, wird in einer bevorzugten Ausführungsform in einem Teil der Reaktorabschnitte 1, 2, 3, insbesondere im ersten Reaktorabschnitt 1 oder im ersten und wenigen nachfolgenden Reaktorabschnitten 1, 2 der Massenstrom dennoch gemessen, jedoch nicht in den nachfolgenden restlichen Reaktorabschnitten 2, 3. Bei den restlichen Reaktorabschnitten 2, 3 wird der Massenstrom über die Pumpenkennlinie abgeschätzt. Dies ist insbesondere dann möglich, wenn der grösste Teil der Umsetzung im ersten bzw. im ersten und den wenigen nachfolgenden Reaktorabschnitten erfolgt. Unter dem "grössten Teil" wird vorzugsweise, jedoch nicht einschränkend, 70 Masseprozent der Edukte verstanden.

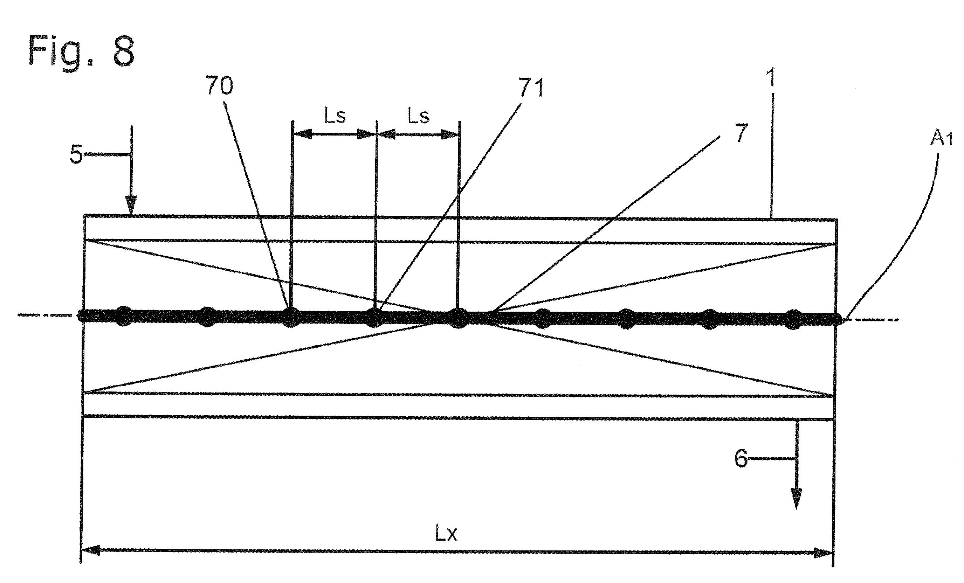

Der mindestens eine sich linear verhaltende Reaktorabschnitt 1, 2, 3 ist in Bezug auf die Hauptströmungsrichtung y in Reaktorsegmene $L_S$ unterteilt. Diese Reaktorsegmente werden im Folgenden auch Segmente genannt. Ein derartiger Reaktorabschnitt mit einem Reaktorsegment $L_S$ ist in Figur 8 dargestellt.

Jedes Reaktorsegment $L_S$ weist an seinem Anfang und an seinem Ende einen Temperatursensor 70, 71 auf, welcher die Temperatur des Produktgemischs beim Eintritt und Austritt aus dem Segment $L_S$ misst.

Vorzugsweise sind die im Reaktorabschnitt angeordneten Temperatursensoren 70, 71 diskrete Temperatursensoren 70, 71. Ein diskreter Temperatursensor ist ein Sensor, welcher mit seinem temperatursensiblen Bereich mit oder ohne Umhüllung in das zu messende Medium eintaucht. Vorzugsweise durchdringt der Temperatursensor den zugehörigen Reaktorabschnitt 1, 2, 3 vorzugsweise den Mischer oder Mischer-Wärmetauscher, mittig. Dies ermöglicht eine sehr präzise Messung der Reaktionsgemischtemperatur.

Die in den Reaktorabschnitten 1, 2, 3 angeordneten Temperatursensoren 70, 71 können PT100 Sensoren, Thermoelemente beispielsweise des Typs K oder Typs J oder Glasfasersensoren sein, welche den Temperaturverlauf des Reaktionsgemisches pro Segment und damit pro Reaktorabschnitt bevorzugt mittig entlang der Reaktorachse messen. Vorzugsweise weisen die statischen Mischer und Mischer-Wärmetauscher Bohrungen auf, welche es erlauben, die Temperatursensoren 70, 71 bzw. den Mehrfachtemperatursensor mittig entlang der Achse des jeweiligen Reaktorabschnitts 1, 2, 3 einzubauen.

Die hier verwendeten Temperatursensoren 4, 4', 70, 71 verfügen vorzugsweise über geeignete Eichmöglichkeiten oder zumindest herstellungsbedingte geringe Toleranz. Sie werden vorzugsweise so im Reaktorsystem eingebaut, dass bei einer gewünschten Betriebstemperatur einerseits die Wärmeverluste möglichst klein sind und andererseits die Messfehler durch mangelnde Anströmung oder suboptimale, nicht repräsentative Lage minimal sind.

In Figur 1 ist schematisch eine dicke Linie mit dem Bezugszeichen 7 versehen. Dies soll darstellen, dass mindestens zwei derartige Temperatursensoren 70, 71 pro Segment $L_S$, vorzugsweise mehrere derartiger Temperatursensoren, zur Messung der Temperatur des Produktgemischs vorhanden sind.

Die dicke Linie ist in einer besonders bevorzugten Ausführungsform ein Mehrfachtemperatursensor, d.h. ein Sensor, welcher axial in den Reaktor eingeführt ist und über die Reaktorlänge an mehreren Orten die lokale Temperatur misst. Ein derartiger Mehrfachtemperatursensor ist beispielsweise ein Temperatursensorrohr 7, welches mehrere in Hauptströmungsrichtung y hintereinander angeordnete Temperatursensoren 70, 71 aufweist.- Das Temperatursensorrohr 7 erstreckt sich im Reaktorabschnitt mindestens über die Länge des Segments $L_S$, vorzugsweise annähernd über die gesamte Länge des Reaktorabschnitts 1, 2, 3.

Ein Beispiel eines solchen axialen Mehrfachtemperatursensors 7 kann der am Markt erhältliche Fluitec Temperatursensor Typ K4-10 mit zehn Sensoren 70, 71 über eine Länge von 500 mm sein. Die Segmentlänge Ls beträgt in diesem Fall 50 mm. Es ist bekannt, dass bei einem derartigen Aufbau sehr genau die lokale Produkttemperatur gemessen werden kann.

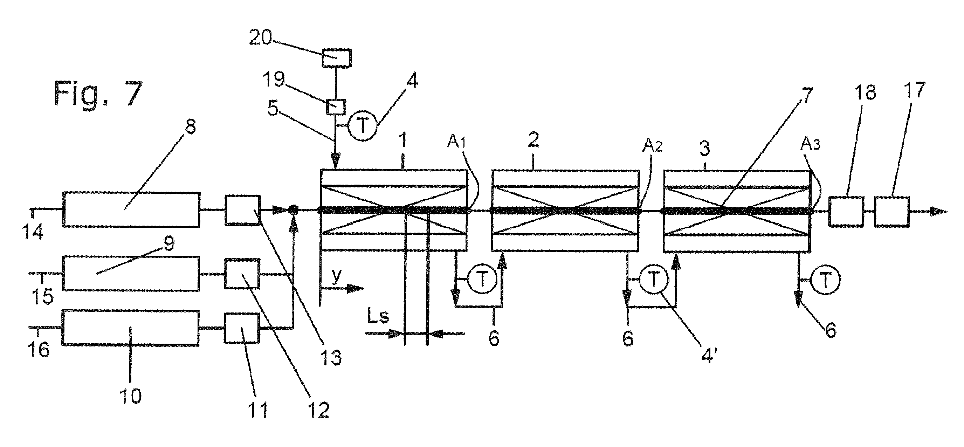

Der Reaktor gemäss Figur 7 unterscheidet sich von demjenigen in Figur 1 dadurch, dass nicht jeder Reaktorabschnitt 1, 2, 3 einen getrennten Zulauf für das Wärmeträgermedium HTM mit entsprechenden individuellen Massenstrom- und Temperatursensoren aufweist. Vielmehr weist nur der erste Reaktorabschnitt 1 einen getrennten Zulauf 5 mit einem Temperatursensor 4 und einen Durchflusssensor 19 auf. Der HTM-Austritt 6 des ersten Reaktorabschnitts 1 führt als HTM-Zulauf in den zweiten Reaktorabschnitt 2 und der HTM-Austritt 6 des zweiten Reaktorabschnitts führt als HTM-Zulauf in den dritten Reaktorabschnitt 3. Der dritte Reaktorabschnitt 3 weist ebenfalls einen HTM-Austritt 6 auf. Alle diese HTM-Austritte 6 sind mit einem Temperatursensor 4' versehen. Somit kann für jeden Reaktorabschnitt eine HTM-Einlauf- und eine HTM-Auslauftemperatur ermittelt werden.

Die übrigen Beschreibungen und Erläuterungen, welche zum Reaktor gemäss Figur 1 gegeben wurden, treffen jedoch auch auf den Reaktor gemäss Figur 7 zu.

Nachfolgend wird unter Erwähnung von theoretischen Grundlagen das erfindungsgemässe Verfahren erläutert:

Eine Grundlage zur frühzeitigen Erkennung von Prozessstörungen, d.h. zur sicheren Überwachung einer chemischen Reaktion ist nachfolgende mathematische Beschreibung eines endo- oder exothermen Reaktionsprozesses im Reaktor:

$$\frac{\delta Q}{\delta t} = \underbrace{\frac{\delta(mc_pT)}{\delta t}}_{\substack{\textit{Zeitliche} \\ \textit{Änderung im} \\ \textit{Bilanzraum}}} = \underbrace{(\dot{m}c_pT)_0}_{\substack{\textit{durch} \\ \textit{Konvektion} \\ \textit{zugeführt}}} - \underbrace{(\dot{m}c_pT)_a}_{\substack{\textit{durch} \\ \textit{Konvektion} \\ \textit{abgeführt}}} + \underbrace{(-\Delta H_{m,R}) \cdot V \cdot r_v}_{\substack{\textit{durch Reaktion} \\ \textit{zeitlich} \\ \textit{verbrauchte oder erzeugte} \\ \textit{Wärmemenge}}} + \underbrace{k \cdot A \cdot (T_{gr} - T)}_{\substack{\textit{ausgetauschte} \\ \textit{Wärmemenge} \\ \textit{pro} \\ \textit{Zeiteinheit}}}$$

<div align="right">Gl. 1</div>

Dabei ist Q der Wärmegehalt der Reaktionsmasse im Reaktor, m die Masse, $\dot{m}$ der Massenstrom, $c_p$ die Wärmekapazität, t die Zeit, T die Temperatur, $\Delta H_{m,R}$ die Reaktionsenthalpie, V das Reaktorvolumen, $r_v$ die Reaktionsgeschwindigkeit, A die Wärmeübertragungsfläche und k der Wärmeübertragungskoeffizient.

In Reaktorabschnitten mit linearem Temperaturverhalten des Wärmeträgermediums besitzt die ausgetauschte Wärmemenge pro Zeiteinheit $k \cdot A \cdot (T_{gr} - T)$ nur veränderbare Temperaturen, welche mit den Temperatursensoren 4, 4' und 7 gemessen werden. $k \cdot A$ ist ein konstanter und bekannter Wert.

Um eine Wärmebilanz in einem kontinuierlichen arbeitenden Reaktor durchzuführen, sollten einerseits folgende reaktionsspezifische Informationen, welche aus der Literatur erhältlich sind oder üblicherweise in einem Reaktionskalorimeter ermittelt werden, bekannt sein:

- die Reaktionsenthalpie und somit die adiabatische Temperaturerhöhung,
- die durch die Reaktion erzeugte zeitabhängige Wärmemenge,
- ausführliche Messdaten über die zeitabhängige Wärmekapazität, Wärmeleitfähigkeit und Dichte
- Informationen über den Reaktionsverlauf, beispielsweise ob monoton, sprunghaft, Änderung des Phasenverhaltens (Entstehen oder Verschwinden von Phasen wie fest, flüssig, gasförmig).

Die sichere Reaktionsführung sollte vorzugsweise in einem Verfahren mit kontinuierlich arbeitenden Reaktor zum Einsatz kommen, welcher

- über eine gute Isolierung verfügt, wenn der Reaktor nicht bei oder nahe bei Raumtemperatur betrieben wird,
- über ein ausreichendes Volumen für den gewünschten Umsatz verfügt,
- genügend Sensoren zur Erfassung von Strömungszuständen und lokalen Temperaturen besitzt und
- ausreichend strömungs- und wärmetechnisch charakterisiert ist.

Diese Voraussetzungen sind im Reaktor gemäss Figur 1 erfüllt.

Eine typische ideale Wärmebilanz über das Wärmeträgermedium (HTM) zeigt Gleichung GL. 2 . Damit lässt sich der abgeführte, mittlere Wärmestrom $J_{Q\,ab}$ pro Reaktor, Reaktorabschnitt oder Reaktorsegment (im Folgenden vereinfacht als Reaktorabschnitt bezeichnet) ermitteln.

$$J_{Q\,ab} = \dot{m}_{HTM} \cdot c_{pHTM} \cdot (T_{HTM\,AUS} - T_{HTM\,EIN}) \qquad\qquad \text{Gl. 2}$$

Dabei steht $\dot{m}_{HTM}$ für den Massenstrom des Wärmeträgers, $c_{pHTM}$ für die mittlere Wärmekapazität des Wärmeträgers und $T_{HTM\,AUS} - T_{HTM\,EIN}$ für die Temperaturdifferenz über den erfassten Reaktorabschnitt.

Zudem kann mit der Gleichung 3 die nicht abgeführte Wärmemenge $J_{Q\,nab}$ im erfassten Reaktorabschnitt bestimmt werden.

$$J_{Q\,nab} = \dot{m}_{Produkt} \cdot c_{p\,Produkt} \cdot (T_{Produkt\,AUS} - T_{Produkt\,EIN}) \qquad\qquad \text{Gl. 3}$$

Idealerweise ist gemäss Gleichung 4 der mittlere chemische produzierte Wärmestrom $J_{Qchem}$ gleich gross wie die Summe der mittleren Wärmeströme $J_{Q\,nab} + J_{Q\,ab}$. Dabei steht $\dot{m}_{Produkt}$ für den Massenstrom des Reaktionsgemisches, $\Delta H_r$ für die spezifische Reaktionsenthalpie und $X_{Anteil}$ den Teilumsatz im Reaktorabschnitt.

$$J_{Q\,nab} + J_{Q\,ab} = J_{Qchem} = \dot{m}_{Produkt} \cdot \Delta H_r \cdot X_{Anteil} \qquad\qquad \text{Gl. 4}$$

Diese klassische Wärmebilanz würde voraussetzen, dass alle Sensoren, d.h. sämtliche Durchflusssensoren zur Erfassung des Massenstromes und Temperatursensoren störungsfrei arbeiten und dass die Wärmeverluste tolerabel, bekannt und quantifizierbar oder sogar vernachlässigbar sind.

Vorzugsweise werden jedoch die Temperatursensoren und vorzugsweise auch die Massenstromsensoren redundant eingesetzt, so dass bei einem ständigen Vergleich ein Ausfall oder eine Störung eines Sensors bemerkt wird. Dies wird in einer bevorzugten Variante erfindungsgemäss dadurch erreicht, dass mindestens ein Teil der Sensoren, welche an gleicher Stelle eingebaut werden, sich stetig vergleichen oder stetig miteinander verglichen werden. Vorzugsweise werden alle Sensoren, welche an derselben Stelle eingebaut sind, miteinander verglichen, sofern sie dieselbe Messgrösse, wie Temperatur oder Massenstrom, messen. An derselben Stelle eingebaut bedeutet hier, dass mindestens zwei Sensoren die Messgröße an nahezu derselben Stelle im Reaktor erfassen, was z.B. durch sog. Doppel-Sensoren (z.B. Doppel-PT100) erfolgen kann. In Figur 1 sind Sensoren, welche an derselben Stelle eingebaut sind, mit denselben Bezugszeichen versehen und als Einheit dargestellt.

Die mehrfache, über die Länge des Reaktors verteilte Messung der Temperatur im Reaktionsgemisch kann ebenfalls sicherheitstechnisch genutzt werden, indem die Wärmebilanzierung nicht nur jeweils über ein Reaktorabschnitt, sondern parallel dazu über die Summe mehrerer Reaktorabschnitte erfolgt. Diese Überwachung gibt die Möglichkeit, fehlerhafte Messwerte und -fühler zu identifizieren, bei der Bilanzierung zu ignorieren und ist Grundlage einer sicheren Betriebsweise.

Die mehrfache, über die Länge des Reaktors verteilte Messung der Temperatur im Reaktionsgemisch ermöglicht darüber hinaus Informationen über die Verteilung der Energiefreisetzung durch die Reaktion und mögliche Freisetzungsspitzen zu erhalten, welche regelungstechnisch zur Optimierung der Reaktionsführung eingesetzt werden können. Andererseits können diese Informationen auch wertvolle Hinweise auf die Ursachen falscher bzw. unerwünschter Reaktionswege und Produkteigenschaften sein.

In jedem Fall ist es vorteilhaft, wenn die Messwerte für Durchflüsse und Temperaturen möglichst genau erfasst werden.
Dies lässt sich erreichen, wenn :

- die Massenströme mit einem Massendurchflussmesser gemessen werden (dies kann beispielsweise ein Coriolis-Massedurchflussmesser sein, der sehr präzise den Massenstrom und die Dichte messen kann).
- die Temperaturmessungen mit sehr präzisen Sensoren erfolgen, beispielsweise mit Widerstandsthermometern (PT100), mit Thermoelementen (Typ J, K) oder mit faseroptischen Messketten.

Zur ausfallsicheren Überwachung können diskrete Sensoren (PT100, Thermoelement) lokal mehrfach vorhanden und überwacht sein.

Für eine exakte Temperaturmessung und daraus resultierende Bilanzierung ist zu berücksichtigen, das die Temperatur, die ein Temperatursensor misst, stets nur dessen eigene Temperatur ist. Das bedeutet, dass ein Temperatursensor ausreichend in das zu messende Reaktions- oder Wärmeträgermedium eingetaucht sein sollte, damit er dessen Temperatur annehmen kann und Wärmeströme zum/vom Mantel des Temperatursensors oder der Umgebung vernachlässigbar sind. Ein Temperatursensor ist dann ausreichend eingetaucht, wenn sich durch weiteres Eintauchen in das konstante Temperaturvolumen keine Änderung der angezeigten Temperatur ergibt. Die resultierenden Messfehler hängen grösstenteils von

- der Eintauchtiefe und der Anströmung,
- der Konstruktion des Sensors, wie z.B. Isolation, Durchmesser und Länge des Sensors,
- den Produkteigenschaften und
- der Strömungsgeschwindigkeit des Produktes ab.

Wenn der Sensor beispielsweise mittig entlang der Längsachse der Reaktorabschnitte in das strömende Produkt eintaucht, ist es möglich, auch bei Strömungsgeschwindigkeiten von 1 mm s$^{-1}$ die Temperatur sehr genau zu messen. Dies ist beispielsweise bei den Temperatursensoren 70, 71 gemäss Figur 8 der Fall.

Bevorzugt reicht der Sensor 70, 71 zur Temperaturmessung des Produktgemischs in den bzw. die statischen Mischer oder Mischer-Wärmetauscher hinein, so dass sich die Anströmung an der Sensorspitze markant erhöht. Diese Anströmung erhöht die Genauigkeit der Temperaturmessung.

CFD Berechnungen (computational fluid dynamics Berechnungen) und Messungen haben gezeigt, dass bei sehr kleinen Strömungen die Eintauchtiefe für Laboranwendungen mindestens das Zehnfache des Sensordurchmessers betragen sollte. Für industrielle Anwendungen mit geringeren Genauigkeitsanforderungen reicht in der Regel eine Eintauchtiefe, welche einem Fünffachen des Sensordurchmessers entspricht, aus.

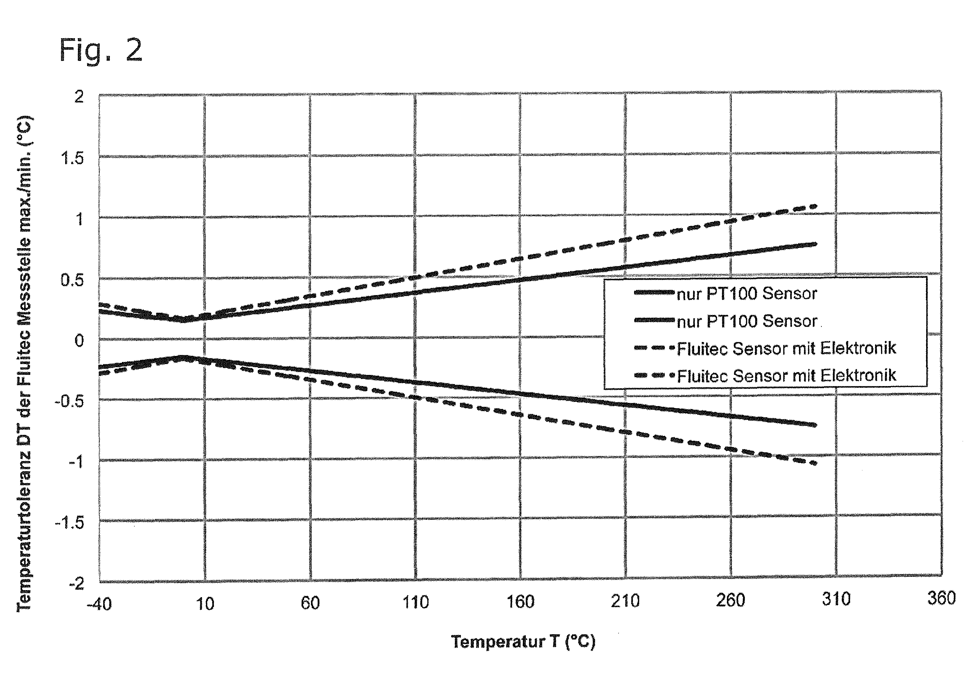

Auch wenn es mit diesen Massnahmen möglich ist, eine präzise Temperaturmessung durchzuführen, so weist jedes Messsystem einen Messfehler mit einem Maximalwert von ∆x auf. Figur 2 zeigt beispielhaft den maximalen Messfehler ∆x als Temperaturtoleranz ∆T von einem PT100 Temperatursensor der Genauigkeitsklasse A mit einer Elektronik (Heraeus-Sensor-Technologie), welcher in Figur 2 als "Fluitec Sensor mit Elektronik" bezeichnet ist, und von einem PT100 Temperatursensor ohne eine derartige Steuerelektronik. Diese Elektronik formt den temperaturabhängigen Widerstand des Sensors in die gewünschte Messgrösse, i.e. Temperatur in °C, um. Es wird ersichtlich, dass der Messfehler abhängig von der gemessen Temperatur ist.

Da dieser Messfehler in die Bilanzierung der Wärmeströme eingeht, sollte die Differenz aus $T_{HTM\,AUS} - T_{HTM\,EIN}$ nicht zu klein sein, da sonst die Wärmebilanz einen erheblichen Fehler aufweisen kann. Aus den Basisgleichungen 2,3,4 und den entsprechenden Fehlern aus den Massenstrommessungen und den Temperaturmessungen ist es möglich, mit einer Fehlerrechnung den entsprechenden möglichen Umsatzfehler des Reaktionssystems zu berechnen.

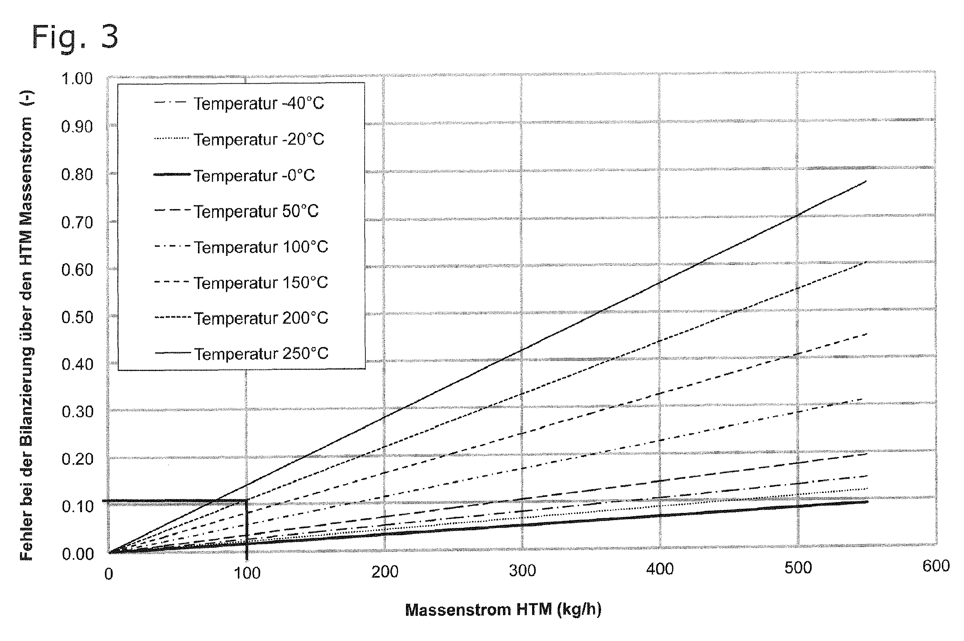

Figur 3 zeigt ein Bilanzierungsbeispiel mit der Fehlerrechnung einer exothermen Reaktion in einem Reaktor gemäss Figur 1 mit statischen Mischer-Wärmetauschern, einem Umsatz von 100%, einer Reaktionsenthalpie von 400 kJ/kg und einem Produkt Massenstrom von 10 kg/h. Es wurde gefunden, dass der Umsatz-Bilanzierungsfehler erheblich von der Betriebstemperatur und dem HTM Massenstrom abhängt. Will man einen maximalen Umsatzfehler von ca. 13% (0.13/100, Figur 3) zulassen, so darf die Reaktionstemperatur bei einem Massenstrom von 100 kg/h nicht höher als 200°C betragen. Wie aus diesem einfachen Beispiel zu erkennen ist, kann mit dieser einfachen Fehlerrechnung abgeschätzt werden, wie zuverlässig die Wärmebilanzierung mit dem gewünschten HTM Massenstrom ist. Je nach Anwendung kann der Umsatz-Fehler kleiner 50%, vorzugsweise kleiner 20% sein. Besonders bevorzugt sollte er kleiner 10% sein. In einer Risikobeurteilung ist es jeweils sinnvoll, aus diesem möglichen Umsatz-Fehler die adiabatische Temperaturerwärmung zu berechnen. Anhand dieser berechneten Fehlerwärme respektive Fehlertemperatur kann das Risiko der ausgelegten Vorrichtung mit Steuerung abgeschätzt werden.

Diese einfache Art von Bilanzierung, welche lediglich auf dem Umsatz-Fehler und der Wärmebilanz basiert, ist anwendbar, wenn alle Edukte 14, 15, 16 auf die Reaktionstemperatur vorerwärmt werden.

Falls das eine oder andere Edukt beispielsweise aus Gründen der thermischen Stabilität nicht erwärmt werden darf, so empfiehlt es sich, die fehlende Wärmemenge in der Bilanzierung zu berücksichtigen, damit die Bilanzierung zulässig und sicher ist.

Vorzugsweise sind deshalb, wie in Figur 1 dargestellt, zusätzliche Wärmetauscher 8, 9, 10 vorgesehen, welche die Eduktströme 14, 15, 16 auf die vorgesehen Reaktionstemperatur bringen. Mit diesem Vorgehen ist einer ausreichenden Reaktionsverfolgung Sorge getragen.

Nachteilig ist, dass in diesem Fall durch die Bilanzierung über den ganzen Reaktor nicht festgestellt werden kann, ob die Reaktion ausreichend gezündet hat und wie viel im Reaktor wo umgesetzt worden ist.

Dieser Nachteil lässt sich beheben, indem der Reaktor oder ein Reaktorabschnitt in zusätzliche Segmente Ls unterteilt wird. Die in Figur 8 dargestellten zusätzlichen Temperatursensoren 70, 71 innerhalb dieser Segmente Ls sorgen dafür, dass ein mittlerer zeitabhängiger resp. längenabhängiger Wärmestrom $J_Q$ pro Segment Ls ermittelt werden kann. Dieser Wärmestrom $J_Q$ gibt die Summe aus dem chemisch produzierten Wärmestrom und dem zu- und abgeführten Wärmestrom im betreffenden Segment Ls an.

Je zahlreicher die Temperaturmessstellen 70, 71 im Innern der Reaktorabschnitte sind, desto kürzer lässt sich das schematisch eingezeichnete Segment Ls wählen und umso zahlreicher sind die einzelnen Segmente Ls, welche bei der Bilanzierung berücksichtigt werden, vorausgesetzt dass eine verwertbare Temperaturdifferenz zwischen den zwei Temperaturmessstellen der Sensoren 70, 71 ermittelt werden kann.

In jedem ausreichend grossen Segment Ls lässt sich eine Temperaturdifferenz ermitteln. Eigene Untersuchungen haben gezeigt, dass das Verhältnis aus der Länge Lx eines Reaktorabschnittes und der Segmentlänge Ls grösser 3, vorzugweise grösser 5, besonders bevorzugt grösser 10 sein sollte, um eine hinreichend genaue Bilanzierung zu ermöglichen.

$$\frac{Lx}{Ls} > 5 \qquad \text{Gl. 5}$$

Die Aufteilung des Reaktionsvolumens in mehrere Reaktorabschnitte hat sich als vorteilhaft erwiesen. Vorteilhaft ist ferner, wenn diese Reaktorabschnitte 1, 2, 3 nicht zu lang sind. Vorzugsweise sind sie so gewählt, dass jeder Abschnitt eine messbare und reproduzierbare Energiebilanz zuverlässig wiedergibt.

Insbesondere sollte der Reaktorabschnitt so gewählt werden, dass der HTM-Temperaturverlauf in einem Reaktorabschnitt "Lx" längs zum Abschnitt näherungsweise linear verläuft. Dies ermöglicht auf sehr einfache Weise, den HTM-Temperaturverlauf im Segment $L_S$ abzuschätzen. Hat einer der Reaktorabschnitte 1, 2, 3 beispielsweise 10 Segmente $L_S$, so kann die HTM-Temperaturdifferenz mit einer guten Näherung durch die Anzahl Segmente $L_S$, also durch 10 geteilt werden. Besonders wichtig ist, dass man damit sehr einfach den nicht abgeführten Wärmestrom $J_{Q\,nab\,Seg}$ pro Segment $L_S$ bestimmen kann.

Es wurde gefunden, dass mit dieser Aufteilung die Summe der akkumulierten Wärmeströme $J_{Q\,seg}$ das Segmente $L_S$, berechnet aus den gemessenen Temperaturdifferenzen, in den einzelnen Segmenten $L_S$ pro Reaktorabschnitt 1, 2, 3 dem nicht abgeführten Wärmestrom $J_{Q\,nab}$ des Reaktorabschnittes entspricht.

Mit der Summe der Wärmeströme $J_{Q\,chem\,seg} = J_{Q\,seg} + J_{Q\,ab\,Seg}$ kann der chemisch umgesetzte Wärmestrom im Reaktorabschnitt resp. im Segment $L_S$ berechnet werden. Dies wiederum erlaubt den Teilumsatz im gesamten Reaktor zu berechnen. In Summe kann nun der Umsatzverlauf entlang des Reaktors dargestellt werden.

Mit der Darstellung der Umsatzkurve ist es dem Anwender möglich, herauszufinden wie viel in einem Reaktorabschnitt umgesetzt und wo der grösste Umsatz erzielt wurde. Darüber hinaus wird es möglich zu erkennen, ob und wo die Reaktion startet und/oder zum Durchgehen tendiert, was regelnde Eingriffe wesentlich wirksamer werden lässt und damit eine sicherere Betriebsweise ermöglicht, als wenn man nur auf Basis der Ein- und Auslauftemperaturen des Reaktionsmediums oder einer Temperatur an beliebiger Stelle im Reaktionsablauf Rückschlüsse auf den Zustand des Reaktors zieht und daraus resultierende notwendige Massnahmen ableitet.

Es wurde abschliessend gefunden, dass unter Berücksichtigung der Fehler-Toleranz-Rechnung wie in Figur 3 dargestellt, der Umsatz ausreichend genau und vertrauenswürdig dargestellt werden kann.

Ist zudem der Wärmedurchgangskoeffizient k über den ganzen Reaktor bekannt, so kann rückwirkend mittels der Gleichung 6 abschnittsweise der Temperaturverlauf auf der Produktseite dargestellt und verglichen werden. k steht dabei für den Wärmedurchgangskoeffizienten, A für die Größe der Heizfläche A und $\Delta T_m$ bildet die Temperaturdifferenz zwischen heizendem und beheiztem Stoff. Dies ist jedoch nur möglich, wenn der k-Wert über den ganzen Reaktor, bzw. Reaktorabschnitt bekannt und konstant ist.

$$J_Q = k \cdot A \cdot \Delta T_m \qquad \text{Gl. 6}$$

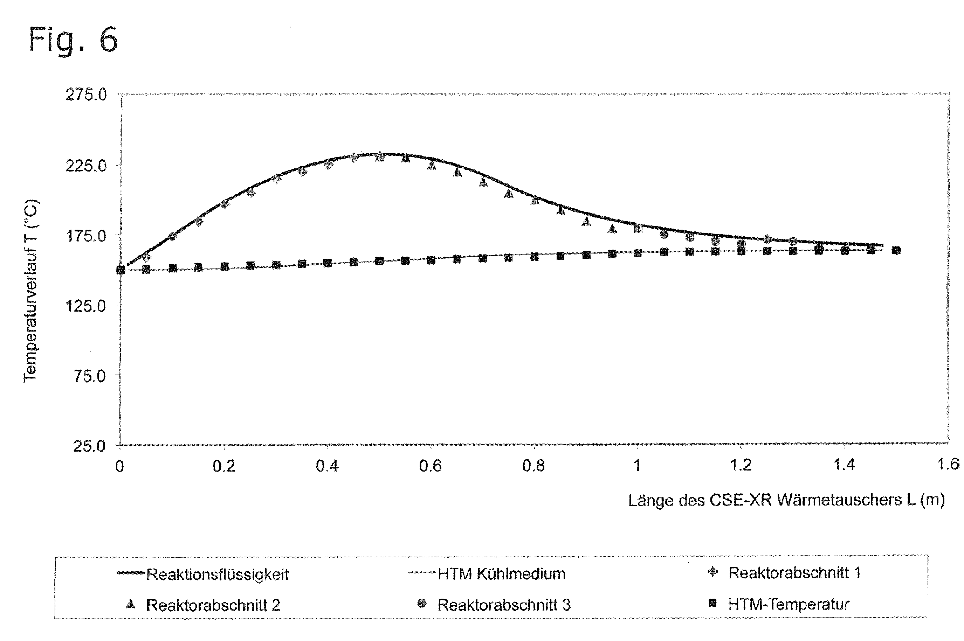

Ergibt sich eine starke Abweichung der Trendlinie gemäss Figur 6, so deutet dies auf einen stark veränderten k-Wert, wie er zum Beispiel durch Fouling auftritt, hin.

Es ist dabei zu beachten, dass der $\alpha$-Wärmeübergangswerte auf der Produkt- und auf der HTM-Seite über Nusselt-Reynolds-Prandelt Funktionen beschrieben werden kann und dass die Reaktorabschnitte 1, 2, 3 konstruktiv derart gebaut sind, dass die Nusselt-Werte bei stationärem Betrieb konstant sind.

Eine besondere Eigenschaft von statischen Mischern und Mischer-Wärmetauschern ist, dass diese im Gegensatz zu herkömmlichen Rohrreaktoren Plug-Flow Eigenschaften (Pfropfenströmung) besitzen und einen konstanten k-Wert aufweisen. Leerrohre dagegen besitzen nur bei turbulenter Strömung Plug-Flow Eigenschaften und der k-Wert ist direkt abhängig von der Länge des Rohrreaktors. Dies kann speziell bei laminarer Strömung oder im sogenannten Übergangsbereich laminar-turbulent direkt zu erheblichen Bilanzierungsfehlern führen. Daher sind statische Mischer und Mischer-Wärmetauscher für die nachfolgend beschriebene erfindungsgemässe Reaktor-Steuerung besonders geeignet. Auf der HTM-Seite sind es die Doppelmantelkonstruktionen mit Ringspalt oder bei Mischer-Wärmtauscher Konstruktionen die innenliegenden Kühlrohre, welche für den Wärmeübergang auf der HTM-Seite verantwortlich sind. Dabei helfen die zentrischen Drähte in den Kühlrohren den k-Wert konstant zu halten.

Nachfolgend wird ein Beispiel des erfindungsgemässen Verfahrens angegeben:

Es handelt sich um eine stark exotherme Reaktion in einem Reaktor mit statischen Mischer-Wärmetauschern. Der Reaktor ist ein CSE-XR-Reaktor von Fluitec und entspricht dem Reaktor gemäss Figur 7. Er besteht aus den drei Reaktorabschnitten 1, 2, 3 mit der Länge von je Lx = 500 mm. Jeder Reaktorabschnitt 1, 2, 3 ist in 10 Segmente unterteilt, wobei jeder Segmentabschnitt die Länge Ls = 50 mm aufweist. Die Reaktorabschnitte 1, 2, 3 sind in Serie geschaltet und werden bezüglich des Wärmeträgermediums HTM im Gleichstrom betrieben.

Der Produktstrom von 10 kg/h besteht aus zwei Eduktströmen und einem Aktivatorstrom. Alle drei Ströme werden mit den Wärmetauschern 8, 9, 10 vortemperiert und mit Durchflussmessern 11, 12, 13 überwacht. Am Austritt misst ein zusätzlicher Durchflussmesser 18 den Produktstrom und überwacht die Summe der drei Eduktströme. Zudem weist der Reaktor Absperrarmaturen und Sicherheitsvorrichtungen auf, welche in Figur 7 nicht eingetragen sind. Optional kann eine IR-, ATR- oder NIR-Sonde 18 kontinuierlich die Vollständigkeit der Umsetzung und die Qualität des Reaktionsproduktes messen.

Folgende Daten der exothermen Reaktion sind bekannt:

- Massenstrom Produkt: 10 kg/h,
- Massenstrom HTM: 100 kg/h
- Reaktionsenthalpie: 400 kJ/kg
- Umsatzfehler aus Fehlerrechnung: ca. 8% gemäss Figur 3
- Reaktionstemperatur am Start: 150°C
- HTM Temperaturverlauf (4 / 4') 150°C / 156°C / 162.4 °C / 163.6°C

- Reaktionszeit: ca. 30 s bei 150°C

Folgende Temperaturen der Reaktionsmischung (70/ 71) wurden im Reaktor gemessen:

Reaktorabschnitt 1, Segment T0 bis T10

| T0 | T1 | T2 | T3 | T4 | T5 | T6 | T7 | T8 | T9 | T10 |
|---|---|---|---|---|---|---|---|---|---|---|
| °C | °C | °C | °C | °C | °C | °C | °C | °C | °C | °C |
| 150 | 159 | 174 | 185 | 197 | 205 | 215 | 220 | 225 | 230 | 231 |
| L0 | L1 | L2 | L3 | L4 | L5 | L6 | L7 | L8 | L9 | L10 |
| m | m | m | m | m | m | M | m | m | m | m |
| 0 | 0.05 | 0.1 | 0.15 | 0.2 | 0.25 | 0.3 | 0.35 | 0.4 | 0.45 | 0.5 |

Reaktorabschnitt 2, Segment T0 bis T10

| T0 | T1 | T2 | T3 | T4 | T5 | T6 | T7 | T8 | T9 | T10 |
|---|---|---|---|---|---|---|---|---|---|---|
| °C | °C | °C | °C | °C | °C | °C | °C | °C | °C | °C |
| 231.0 | 230 | 225 | 220 | 213 | 205 | 200 | 193 | 185 | 180 | 180 |
| L0 | L1 | L2 | L3 | L4 | L5 | L6 | L7 | L8 | L9 | L10 |
| m | m | m | m | m | m | M | m | m | m | m |
| 0.5 | 0.55 | 0.6 | 0.65 | 0.7 | 0.75 | 0.8 | 0.85 | 0.9 | 0.95 | 1 |

Reaktorabschnitt 3, Segment T0 bis T10

| T0 | T1 | T2 | T3 | T4 | T5 | T6 | T7 | T8 | T9 | T10 |
|---|---|---|---|---|---|---|---|---|---|---|
| °C | °C | °C | °C | °C | °C | °C | °C | °C | °C | °C |
| 180 | 175 | 173 | 170 | 168 | 171.5 | 170 | 165 | 164 | 164 | 163.5 |
| L0 | L1 | L2 | L3 | L4 | L5 | L6 | L7 | L8 | L9 | L10 |
| m | m | m | m | m | m | M | m | m | m | m |
| 1 | 1.05 | 1.1 | 1.15 | 1.2 | 1.25 | 1.3 | 1.35 | 1.4 | 1.45 | 1.5 |

Die mit den ersten und zweiten Temperatursensoren 4, 4' gemessenen Temperaturen des HTM-Stroms wurden abschnittsweise in 10 Segmente pro Reaktor unterteilt und berechnet. Dies ist möglich, weil sich der HTM Temperaturverlauf im Reaktorabschnitt linear verhält. Dadurch lässt sich die HTM Temperaturdifferenz in den 10 Segmenten mitteln.
Beispiel:

11 Produktsensoren ergeben 10 Segmente. HTM seitig gibt es nur zwei Temperatursensoren mit z.B. 150°C einlaufseitig und 156°C auslaufseitig. Die Temperatur nimmt somit pro Segment um 0.6°C zu.

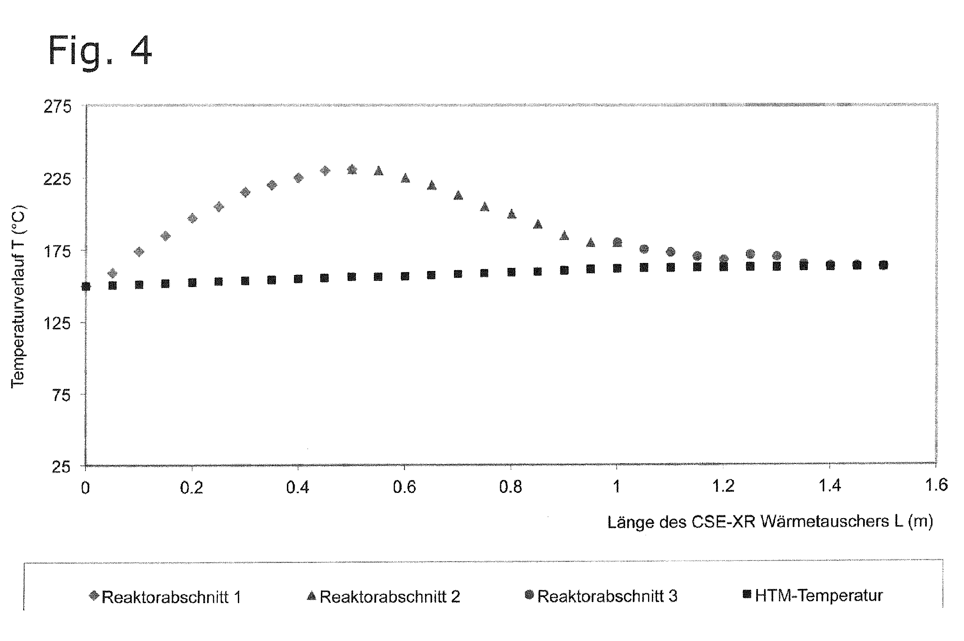

Figur 4 zeigt die Temperaturverläufe vom Reaktionsmischung und Wärmeträger (HTM) in den drei Reaktorabschnitten 1, 2, 3. Die Temperaturspitze von 236°C wird nach 0.5 m Reaktorlänge gut sichtbar. Allerdings kann man keine Aussage über den Umsatz machen.

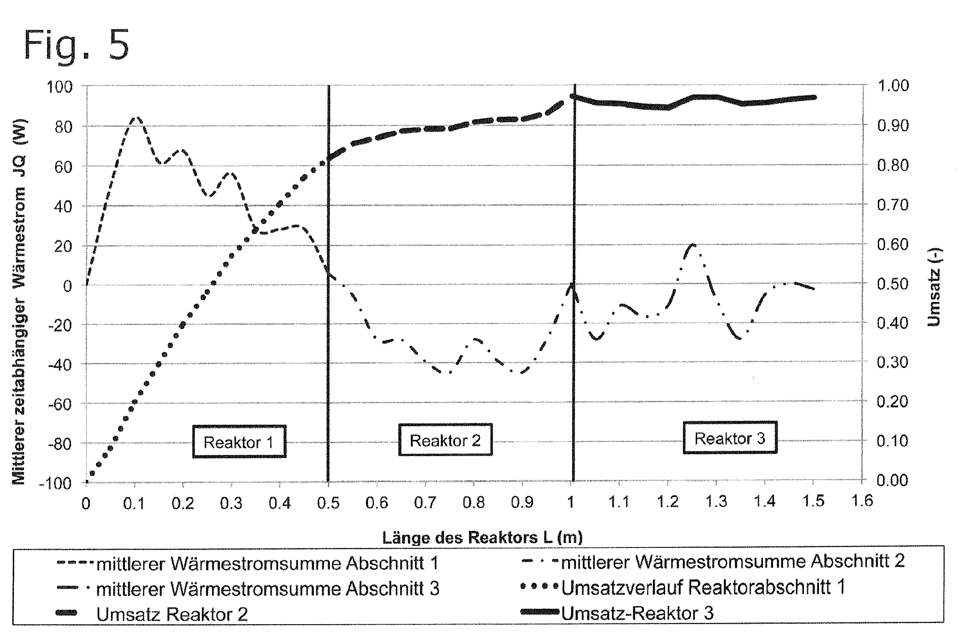

In Figur 5 wird die Summenkurve der Wärmeströme in den Reaktorsegmenten als mittlerer Wärmestromverlauf in Funktion der Länge dargestellt. Es zeigt sich, dass dieser positiv und negativ sein kann. Dies lässt sich so erklären, dass im ersten Reaktorabschnitt der chemisch produzierte Wärmestrom grösser als der abgeführte Wärmestrom mit negativem Vorzeichen ist. Im zweiten und dritten Reaktorabschnitt ist der chemisch produzierte Wärmestrom kleiner als der abgeführte Wärmestrom, der desswegen hier ein negatives Vorzeichen trägt. Die Summe der Wärmeströme in den einzelnen Segmenten ergibt den nicht abgeführten Wärmestrom $J_{Q\,nab}$.
Mit den vorhandenen Informationen lässt sich der Teilumsatz in einem Segment nur berechnen, wenn eine Linearisierung der HTM-Temperatur erfolgt. Der Teilumsatz im Segment kann dann mit der Gleichung 7 bestimmt werden.

$$Teilumsatz\ X = \frac{J_{Q\,seg} + J_{Q\,ab\,Seg}}{J_{chem}\,100\%} \quad \text{Gl. 7}$$

Figur 5 zeigt neben dem Wärmestrom auch die so ermittelte Teilumsatzsummenkurve. Jetzt wird gut ersichtlich, dass über 60% im ersten Reaktorabschnitt umgesetzt wird. Danach flacht die Umsatzkurve deutlich ab. Es zeigt sich, dass der Umsatz bei ca. 95% einpendelt, obwohl gemäss Kinetik der Umsatz vollständig zu erwarten ist. Dies lässt sich durch die Fehlerrechnung erklären, welche einen möglichen Umsatzfehler von ca. 8% prognostiziert hat.

Figur 6 zeigt abschliessend die linearisierte HTM-Temperaturkurve und den mittels bekannter Kinetik und bekanntem k-Wert berechneten Temperaturverlauf für das Reaktionsmedium.

Dieses Beispiel zeigt, dass die beschriebene Reaktion mit geeigneten Temperatursensoren sehr gut überwacht werden kann und über die Wärmebilanzierung eine gute Abschätzung und/oder Ermittlung des Umsetzungsverlaufes möglich ist..

Zusammenfassend lässt sich festhalten:

Um eine Teilumsatzsummenkurve erstellen zu können, muss die exotherme oder endotherme Reaktion in einem polytropen Zustand kontrolliert werden. Dabei sollte die HTM Menge ausreichend gering sein, um eine messbare, präzise Temperaturdifferenz zu erzielen, aber auch ausreichend hoch sein, um eine Linearisierung der HTM-Temperatur in den Segmenten der Reaktorabschnitte zu gewährleisten. Überraschenderweise wurde gefunden , dass mit einer einfachen Fehlerrechnung die Genauigkeit der Teilumsatzsummenkurve angegeben werden kann. Allerdings sollte darauf geachtet werden, dass der k-Wert des Reaktors oder zumindest über den Reaktorabschnitt annähernd konstant ist. Da dies bei statischen Mischern und Mischer-Wärmetauscher auf der Produktseite in allen Strömungsbereichen der Fall ist, ist beim Wärmeübergang primär auf den $\alpha$-Wärmeübergangswert auf der HTM Seite zu achten. Genauso überraschend ist, dass die Reaktorsteuerung über Massenstrom- und Temperaturmessung nur mit geringen HTM Mengen möglich ist. Dies ist möglich, wenn auf der HTM Seite auch eine definiert gleichförmige Strömung, bevorzugt eine zwangsgeführte Strömung, vorliegt, welche zu einem konstanten k-Wert beiträgt.

Diese Bilanzierung lässt sich nun nicht nur zur Überwachung des Reaktors, sondern auch zu seiner Steuerung einsetzen, wie im Folgenden gezeigt ist:

Chemische Reaktionen folgen generell einer Reaktionskinetik, welche sehr unterschiedlich dargestellt werden kann. Eine bekannte Darstellung ist die Umsatzdarstellung in Funktion der Zeit und der Temperatur. Die Temperaturabhängigkeit der Reaktionskinetik erfolgt dabei typischerweise mit dem Ansatz nach Arrhenius. In hier vorliegenden Fall ist die Reaktorlänge über das Volumen mit der Reaktionszeit und dem Umsatz verknüpft. Dies ermöglicht es den Umsatzverlauf in den Reaktorabschnitten darzustellen und den Reaktor zu regeln resp. zu steuern.

Aus beliebigen Punkten entlang des Reaktorabschnittes wird mindestens ein Referenzumsatz zur Steuerung der Reaktion gewählt. Dabei erfolgt grundsätzlich die Steuerung respektive die Regelung des Reaktors über eine Variation der HTM Temperatur oder über Not-Massnahmen.

Ist der Umsatz beispielsweise an einem bestimmten Punkt grösser als gewünscht, so wird die HTM Temperatur entsprechend reduziert. Da sich üblicherweise bei einer Temperaturreduktion von ca. 10°C die Reaktionsgeschwindigkeit halbiert, bedeutet dies im vorliegenden Fall, dass sich innerhalb dieser Temperaturdifferenz von 10°C das benötigte Reaktionsvolumen bei gleichem Umsatz verdoppelt.

Alternativ oder zusätzlich generiert die Steuerung/Regelung umsatzbezogen entsprechende Fehlermeldungen und führt Notmassnahmen auf, welche es erlauben, den Prozess sicher zu betreiben. Solche Notmassnahmen sind beispielsweise:

- sofortiges Spülen/Verdünnen des Reaktors mit einem inerten Lösungsmittel,
- sofortiges Kühlen des Reaktors mit einem zugeschalteten Notkühlkreislauf,
- sofortiges Umschalten des Produktstromes in ein Notauffangvolumen
- sofortiges Eindosieren und/oder -schiessen eines Stoppers oder Retarders.

Beim Entwickeln eines Reaktionsprozesses empfiehlt sich folgendes Vorgehen:

Dank der zumindest teilweisen Vortemperierung auf die Reaktionsstarttemperatur kann mit dem Beginn des Prozessablaufes der erste Umsatzverlauf dargestellt werden, sofern keine Inhibitions- oder Induktionsperiode auftritt Die ersten Resultate im kontinuierlichen Betrieb erfordern folgende Maßnahmen und Entscheidungen:

Beobachtung: Runaway

- Die Reaktion weist zu Beginn im Reaktorabschnitt 1 einen sehr steilen, schnellen und im Rahmen der zulässigen Fehlerrechnung einen annähernd vollständigen Umsatz auf. Der Umsatz nimmt pro Segment sehr stark zu. Die Reaktion scheint durchzugehen.
Massnahme:

Für jedes Segment kann ein Teilumsatz bestimmt werden. Überschreitet der Teilumsatz beispielsweise an einem Ort (in einem bilanzierten Reaktorabschnitt) einen definierten Wert, so erfolgt eine Fehlermeldung und es müssen Notmassnahmen getroffen werden. Der Prozess muss danach auf einem tieferen Temperaturniveau neu gestartet werden oder für eine bessere Wärmeabfuhr, i.e. für einen besseren Wärmeübergang, gesorgt werden.

Beobachtung: keine selektive Reaktion

- Die Reaktion weist zu Beginn im ersten Reaktorabschnitt einen sehr steilen, schnellen und, im Rahmen der zulässigen Fehlerrechnung, einen annähernd vollständigen Umsatz auf. Der Teilumsatz im Reaktorabschnitt ist resp. die einzelnen Teilumsätze in den den Reaktorabschnitt bildenden Reaktorsegmenten sind jedoch im zulässigen Bereich. Die Reaktion ist dabei voll unter Kontrolle. Bei der Untersuchung der Produktqualität wurden jedoch Nebenreaktionen festgestellt.
Massnahme:

Die Reaktionstemperatur ist zu hoch und die HTM Temperatur muss tiefer eingestellt werden, was aber eine langsamere Reaktion und somit ein größeres Volumen zur Erzielung des gleichen Umsatzes bedeutet.

Auch die Vortemperierung kann beispielweise tiefer eingestellt werden. Dabei muss jedoch der geringere, mittlere Wärmestrom der Vortemperierung in der Wärmebilanz berücksichtigt werden.
Über eine Temperaturmesskette im Reaktionsraum wird der Bereich der kritischen Temperatur ermittelt und es wird durch konstruktive Massnahmen dafür gesorgt, dass dort ein besserer Wärmetausch erfolgt. Alternativ kann auch der Durchsatz erhöht werden, um die lokale Temperaturüberhöhung zu reduzieren, was aber ein größeres Reaktionsvolumen (=Reaktorlänge) für vergleichbaren Umsatz bedeutet.

Beobachtung: keine sichtbare Temperaturänderung entlang des Reaktors bzw. des Reaktionsweges

- Die Reaktion weist generell keinen sichtbaren polytropen Temperaturverlauf auf. Der Umsatz ist sehr gering, es wurde also nur sehr wenig oder kaum etwas umgesetzt.
Massnahme:

Die Reaktionstemperatur ist zu tief und die HTM Temperatur muss höher eingestellt werden.

Die Reaktion ist nicht ausreichend angesprungen. Es liegen möglicherweise inhibierenden Verunreinigungen der Ausgangsstoffe vor oder es ist zu einem Dosierfehler gekommen (fehlender Starter, Aktivator, Katalysator, ...) Es kann schlimmstenfalls zu spontaner Reaktion an beliebiger Stelle des Reaktors mit nicht kontrollierbarer Wärmeentwicklung kommen.
Die Edukt -Zuläufe sind zu stoppen und die Anlage mit Lösungs- und/oder Reinigungsflüssigkeit zu säubern.

Aus den obigen drei Beispielen wird ersichtlich, dass die Regelung resp. Steuerung einer Reaktion gut durchzuführen ist, wenn vorab im Labor Versuche durchgeführt werden, welche mögliche Reaktionsstörungen auf ihre Auswirkung auf Reaktionsverlauf, Reaktorsicherheit und Produktqualität hin untersuchen und dabei geeignete Gegenmaßnahmen oder Korrekturen ermittelt werden können.

BEZUGSZEICHENLISTE

| | |
|---|---|
| 1 | erster Reaktorabschnitt |
| 2 | zweiter Reaktorabschnitt |
| 3 | dritter Reaktorabschnitt |
| 4 | zulaufseitiger HTM-Temperatursensor am Reaktorabschnitt 1 |
| 4' | auslaufseitiger HTM-Temperatursensor an Reaktorabschnitt 1,2,3 3 |
| 5 | HTM-Zulauf |
| 6 | HTM-Auslauf |
| 7 | innenliegender Temperatursensor |
| 8, 9 , 10 | Wärmetauscher zur Vortemperierung |
| 11, 12, 13 | Eduktdurchflussmesser |
| 14, 15, 16 | Zulauf der Eduktströme |
| 17 | Qualitätsüberwachungssonde |
| 18 | Summen-Durchflusssensor |
| 19 | HTM-Durchflussmesser |
| 20 | HTM-Pumpe |

| | |
|---|---|
| T | HTM Temperaturmessstelle |
| Ls | Reaktorsegment |
| Lx | Reaktorabschnitt |
| y | Hauptströmungsrichtung, Länge des Reaktors |
| $A_1$ | Auslauf des ersten Reaktorabschnitts |
| $A_2$ | Auslauf des zweiten Reaktorabschnitts |
| $A_3$ | Auslauf des dritten Reaktorabschnitts und der Reaktors |

**Patentansprüche**

1. Verfahren zur Überwachung einer endothermen oder exothermen chemischen Reaktion in einem kontinuierlich betriebenen Reaktor mit einer Hauptströmungsrichtung und mit mindestens einem Reaktorabschnitt,

   - wobei dem Reaktor Stoffe zugeführt werden und im Reaktor ein Produktgemisch aus diesen Stoffen und ihren Umsetzungsprodukten entsteht,
   - wobei mindestens ein Reaktorabschnitt des mindestens einen Reaktorabschnitts von einem Wärmeträgermedium durchströmt wird, wobei sich die Temperaturänderung des Wärmeträgermediums innerhalb des Reaktorabschnitts in Bezug auf die Hauptströmungsrichtung annähernd linear verhält,
   - wobei eine Temperaturdifferenz einer Eingangstemperatur des Wärmeträgermediums beim Eintritt in diesen einen Reaktorabschnitt und einer Ausgangstemperatur des Wärmeträgermediums beim Austritt aus diesem einen Reaktorabschnitt ermittelt wird,
   - wobei der Massenstrom des Wärmeträgermediums durch den einen Reaktorabschnitt ermittelt wird,
   - wobei mindestens eine Temperaturdifferenz des Produktgemischs zwischen einer ersten Stelle und einer zweiten Stelle innerhalb dieses einen Reaktorabschnitt ermittelt wird, wobei der Bereich zwischen der ersten Stelle und der zweiten Stelle ein Reaktorsegment des einen Reaktorabschnitts bilden,
   - wobei der Massenstrom des Produktgemischs durch den einen Reaktorabschnitt ermittelt wird,
   - wobei basierend auf dem ermittelten Massenstrom des Wärmeträgermediums und der ermittelten Temperaturdifferenz des Wärmeträgermediums bezogen auf gesamten einen Reaktorabschnitt und unter Berücksichtigung der linear verlaufenden Temperaturänderung die im Reaktorsegment des einen Reaktorabschnitts abgeführte Wärmemenge berechnet wird,
   - wobei basierend auf dem ermittelten Massenstrom des Produktgemischs und der ermittelten Temperaturdifferenz des Produktgemischs die im Reaktorsegment des einen Reaktorabschnitts nicht abgeführte Wärmemenge berechnet wird und
   - wobei anhand der Summe der abgeführten Wärmemenge und der nicht abgeführten Wärmemenge die chemisch umgesetzte Wärmemenge in diesem Reaktorsegment berechnet wird.

2. Verfahren nach Anspruch 1, wobei basierend auf der chemisch umgesetzten Wärmemenge der Teilumsatz im Reaktorsegment berechnet wird.

3. Verfahren nach einem der Ansprüche 1 oder 2, wobei die Temperatur des Wärmeträgermediums am Eingang und am Ausgang des einen Reaktorabschnitts gemessen wird oder dass die Temperaturdifferenz des Wärmeträgermediums zwischen Eingang und Ausgang des einen Reaktorabschnitts gemessen wird.

4. Verfahren nach einem der Ansprüche 1 bis 3, wobei der Massenstrom des Wärmeträgermediums beim Eintritt in den einen Reaktorabschnitt gemessen wird.

5. Verfahren nach einem der Ansprüche 1 bis 4, wobei die Temperatur des Produktgemischs an der ersten Stelle und an der zweiten Stelle gemessen wird oder dass die Temperaturdifferenz des Produktgemischs zwischen der ersten Stelle und der zweiten Stelle gemessen wird.

6. Verfahren nach einem der Ansprüche 1 bis 5, wobei der Massenstrom der Summe der zugeführten Stoffe am Eingang und/oder der Massenstrom des Produktstroms bzw. des Produkts am Ausgang des Reaktors gemessen werden.

7. Verfahren nach einem der Ansprüche 3 bis 6, wobei die Messung durch mindestens zwei Sensoren redundant erfolgt und die Messwerte redundanter Sensoren miteinander verglichen werden.

8. Verfahren nach einem der Ansprüche 1 bis 7, wobei die Temperaturdifferenz des Produktstrom an mehr als zwei Stellen im Reaktorabschnitt ermittelt wird, wobei jeweils zwei dieser Stellen ein Reaktorsegment bilden, und wobei im Reaktorabschnitt für mehrere Reaktorsegmente die zugehörige chemisch umgesetzte Wärmemenge berechnet wird.

9. Verfahren nach einem der Ansprüche 1 bis 8, wobei das Verfahren an mindestens zwei, drei oder mehr in Hauptströmungsrichtung hintereinander und in Serie angeordneten Reaktorabschnitten eines Reaktors durchgeführt wird.

10. Verfahren nach Anspruch 9, wobei erste Berechnungen der chemisch umgesetzten Wärmemenge über eine Gruppe von Segmenten für jedes einzelne Segment einzeln durchgeführt werden und wobei eine zweite Berechnung der chemisch umgesetzten Wärmemenge über diese Gruppe von Segmente gemeinsam erfolgt und wobei die Summe der ersten Berechnungen mit der zweiten Berechnung verglichen wird.

11. Verfahren nach einem der Ansprüche 1 bis 10, wobei nach Massgabe der berechneten chemisch umgesetzten Wärmemenge der Reaktor gesteuert wird.

12. Chemischer Reaktor zur Durchführung des Verfahrens nach einem der Ansprüche 1 bis 11, wobei der Reaktor mindestens einen Reaktorabschnitt aufweist, welcher einen ersten Zulauf zur Zuführung von Stoffen in den Reaktor aufweist und einen ersten Auslauf zur Abführung des aus den Stoffen durch endotherme oder exotherme Reaktion entstehenden Produktes aufweist, wobei im ersten Auslauf des Reaktors ein Massenstromsensor angeordnet ist zur Ermittlung des Massenstroms des Produktgemischs, wobei der Reaktor ferner einen zweiten Zulauf und einen zweiten Auslauf für ein Wärmeträgermedium aufweist, wobei im zweiten Zulauf und im zweiten Auslauf mindestens ein Temperatursensor zur Ermittlung der Temperatur oder der Temperaturdifferenz des Wärmeträgermediums angeordnet ist und wobei im zweiten Zulauf ein Sensor zur Ermittlung des Massenstroms des Wärmeträgermediums angeordnet ist, und wobei innerhalb des Reaktorabschnitts an einer ersten Stelle und an einer zweiten Stelle, welche in Hauptströmungsrichtung hintereinander angeordnet sind und ein Reaktorsegment definieren, je ein Temperatursensor zur Ermittlung der Temperatur oder der Temperaturdifferenz des Produktgemischs an dieser ersten und zweiten Stelle angeordnet ist.

13. Reaktor nach Anspruch 12, wobei der Reaktorabschnitt einen statischen Mischer oder einen Mischer-Wärmetauscher aufweist.

14. System zur Durchführung des Verfahrens, wobei das System ausgebildet ist, um die Temperaturdifferenz des Wärmeträgermediums, die Temperaturdifferenz des Produktgemischs, den Massenstrom des Wärmeträgermediums und den Massenstrom des Produktgemischs zu bestimmen und wobei das System ausgebildet ist, um die chemisch umgesetzte Wärmemenge zu berechnen.

15. System nach Anspruch 14, wobei das System den Reaktor nach einem der Ansprüche 12 oder 13 aufweist, wobei das System eine elektronische Auswerteeinheit aufweist zur Berechnung der chemisch umgesetzten Wärmemenge basierend auf den gemessenen Werten und/oder eine elektronische Steuereinheit vorhanden ist zur Steuerung des Reaktors basierend auf der berechneten chemisch umgesetzten Wärmemenge.

Fig. 1

## Fig. 2

Fig. 3

Fig. 4

Fig. 5

Fig. 6

Fig. 7

# Fig. 8

EP 3 181 221 A1

**Europäisches Patentamt**
**European Patent Office**
**Office européen des brevets**

# EUROPÄISCHER RECHERCHENBERICHT

Nummer der Anmeldung

EP 15 20 0463

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 374 949 A (ASHE MORRIS LTD [GB]) 30. Oktober 2002 (2002-10-30) * Seite 3, Zeilen 20-26; Ansprüche; Abbildungen 7,9 * * Seite 4, Zeilen 13-15 * * Seite 5, Zeile 8 - Zeile 27 * * Seite 10, Zeilen 7-17 * * Seite 13, Zeilen 13-24 * * Seite 15, Zeile 12 - Zeile 13 * * Seite 18, Zeilen 5-13 * * Seite 20, Zeilen 17-27 * * Seite 22, Zeilen 30-31 * ----- | 1-15 | INV. B01J19/00 B01J19/24 |
| X | US 3 991 258 A (BECKINGHAM BRIAN FRANCIS ET AL) 9. November 1976 (1976-11-09) * Spalte 1, Zeile 60 - Spalte 2, Zeile 15 * * Spalte 2, Zeile 54 - Spalte 3, Zeile 32 * ----- | 1-15 | |

RECHERCHIERTE SACHGEBIETE (IPC)

B01J

Der vorliegende Recherchenbericht wurde für alle Patentansprüche erstellt

| Recherchenort | Abschlußdatum der Recherche | Prüfer |
|---|---|---|
| München | 30. Mai 2016 | Serra, Renato |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 20 0463

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-05-2016

| Im Recherchenbericht angeführtes Patentdokument | Datum der Veröffentlichung | Mitglied(er) der Patentfamilie | Datum der Veröffentlichung |
|---|---|---|---|
| GB 2374949 A | 30-10-2002 | EP 1381632 A1<br>GB 2374949 A<br>US 2004208806 A1<br>WO 02088191 A1 | 21-01-2004<br>30-10-2002<br>21-10-2004<br>07-11-2002 |
| US 3991258 A | 09-11-1976 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1067352 A
- WO 2008141472 A
- EP 2796195 A
- EP 2286904 A
- CH 705823

**In der Beschreibung aufgeführte Nicht-Patentliteratur**

- **ANNETTE KNORR.** Anwendung der TRAS 410 auf die sicherheitstechnische Beurteilung einer Perestersynthese. *Dissertation,* 2005
- **VON PETER HUGO ; FERNANDO LOPEZ.** *Chem. Ing. Tech.,* 2009, vol. 81 (1-2